# EUROPEAN PATENT APPLICATION

(11) **EP 1 841 176 A1**
(43) Date of publication of application: **03.10.2007**
(21) Application number: 07105211.2
(22) Date of filing: 29.03.2007
(51) Int. Cl.: H04L 29/06

(54) **Communication system, information processing device, information processing method, and program**

(30) Priority: 30.03.2006 JP 2006095968
(71) Applicant: Sony Corporation, Minato-ku Tokyo (JP)
(72) Inventor: Nakajima, Yasuhisa, Tokyo (JP)
(74) Representative: Körber, Martin Hans

(57) **Abstract**

Herein disclosed a communication system including a first information processing device 1-1 and a second information processing device 1-2 connected to each other via a network, wherein the first information processing device 1-1 includes a display controlling unit and a setting unit. The second information processing device 1-2 includes a display controlling unit and a communicating unit.

## Description

### CROSS REFERENCES TO RELATED APPLICATIONS

The present invention contains subject matter related to Japanese Patent Application JP 2006-095968 filed with the Japan Patent Office on March 30, 2006, the entire contents of which being incorporated herein by reference.

### BACKGROUND OF THE INVENTION

### 1. Field of the Invention

The present invention relates to a communication system, an information processing device, an information processing method, and a program, and particularly to a communication system, an information processing device, an information processing method, and a program that make it possible to easily set a reservation to view a content while communication is performed between devices.

### 2. Description of the Related Art

Attention has recently been directed to systems for enabling communication with a person at a remote place using the Internet. Such systems include for example videophone systems for enabling communication by mutually transmitting and receiving pictures and voice, VoIP (Voice over IP) systems for enabling communication by mutually transmitting and receiving only voice, and chat systems for enabling communication by transmitting and receiving text data.

In addition, a system has been proposed which allows voice conversation using a VoIP system while a same content such as a television program or the like is received synchronously by both devices. Thereby people at places distant from each other can enjoy voice conversation about a program as occasion arises while viewing the same program, and can thus share emotion, which is difficult when individually viewing the program and having conversation after viewing the program. An advantage of being able to share emotion is especially great when the program that the people view together while having conversation is a sports program.

Patent Document 1 (Japanese Patent Laid-Open No. 2006-41886) discloses a system for enabling people at places distant from each other to communicate by videophone while viewing a same content.

In the case of thus viewing a same program while having conversation using VoIP, there may arise a problem of how to start the viewing.

For example, in a case where a user intends to view a program while enjoying conversation with an acquaintance, even when the user calls the acquaintance by fixed-line telephone, portable telephone, or VoIP telephone (telephone using VoIP) to propose the viewing, there is a small possibility of the acquaintance being at home and in a state of being able to readily view the program to be viewed together.

While schedules could be adjusted in advance after the user makes a proposition by saying for example "Let's talk while viewing this program to be broadcast tomorrow", this requires the adjustment of the schedules in advance using the telephone or electronic mail, which is troublesome.

Further, even when the schedules are thus adjusted, staring to view the program while having conversation depends on memory of the user, and thus may not be performed surely, as in a case where the user forgets to turn on power to a television receiving device at a broadcasting start time of the program.

If a reservation for viewing a program while having conversation with a particular person can be set in a device, the reception of the program is automatically started at the broadcasting start time of the program, and communication with a device used by the other person is automatically established to enable voice conversation, the viewing of the same program while enjoying conversation can be started smoothly.

### SUMMARY OF THE INVENTION

The present invention is to make it possible to easily set a reservation to view a content while communication is performed between devices.

A communication system according to a first embodiment of the present invention includes a first information processing device and a second information processing device connected to each other via a network. Of these devices, the first information processing device includes a display controlling unit for performing control to display a list of devices selectable as other devices with which to perform communication while viewing a predetermined content when the predetermined content is selected from a list of contents, and a setting unit for, when the second information processing device is selected from the list of the devices, the list being displayed by the display controlling unit, transmitting information on the predetermined content to the second information processing device, and when information indicating that a user of the second information processing device has consented to view the predetermined content while performing communication is transmitted from the second information processing device, setting a reservation to view the predetermined content while performing communication with the second information processing device, and the second information processing device includes a display controlling unit for performing control to display a selection screen used to make a selection as to whether to consent to view the predetermined content while performing communication with the first information processing device when information on the predetermined content selected by a user of the first information processing device is transmitted from the first information processing device, and a communicating unit for transmitting, to the first information processing device, information indicating that the user of the second information processing device has made a selection to consent to view the predetermined content while performing communication with the first information processing device when the user of the second information processing device has made the selection from the selection screen to consent to view the predetermined content while performing communication with the first information processing device.

An information processing device according to a second embodiment of the present invention includes: a display controlling unit for performing control to display a list of devices selectable as other devices with which to perform communication while viewing a predetermined content when the predetermined content is selected from a list of contents; and a setting unit for, when a predetermined device is selected from the list of the devices, the list being displayed by the display controlling unit, transmitting information on the predetermined content to the predetermined device, and when information indicating that a user of the predetermined device has consented to view the predetermined content while performing communication is transmitted from the predetermined device, setting a reservation to view the predetermined content while performing communication with the predetermined device.

The information processing device can further include a communicating unit for starting communication with the predetermined device according to the reservation set by the setting unit.

The information processing device can further include: an obtaining unit for obtaining audio data; and an outputting unit for outputting audio on a basis of the audio data. In this case, the communicating unit can transmit the audio data obtained by the obtaining unit to the predetermined device, and receive audio data transmitted from the predetermined device and output audio from the outputting unit on a basis of the received audio data.

An information processing method or a program according to the second embodiment of the present invention includes the steps of: displaying a list of devices selectable as other devices with which to perform communication while viewing a predetermined content when the predetermined content is selected from a list of contents; and when a predetermined device is selected from the list of the devices, transmitting information on the predetermined content to the predetermined device, and when information indicating that a user of the predetermined device has consented to view the predetermined content while performing communication is transmitted from the predetermined device, setting a reservation to view the predetermined content while performing communication with the predetermined device.

An information processing device according to a third embodiment of the present invention includes: a display controlling unit for performing control to display a selection screen used to make a selection as to whether to consent to view a predetermined content selected by a user of a predetermined device connected to the information processing device via a network while performing communication with the predetermined device when information on the predetermined content is transmitted from the predetermined device; and a communicating unit for transmitting, to the predetermined device, information indicating that a user has made a selection to consent to view the predetermined content while performing communication with the predetermined device when the user has made the selection from the selection screen to consent to view the predetermined content while performing communication with the predetermined device.

The information processing device can further include a setting unit for setting a reservation to view the predetermined content while performing communication with the predetermined device.

The communicating unit can start communication with the predetermined device according to the reservation set by the setting unit.

The information processing device can further include: an obtaining unit for obtaining audio data; and an outputting unit for outputting audio on a basis of the audio data. In this case, the communicating unit can transmit the audio data obtained by the obtaining unit to the predetermined device, and receive audio data transmitted from the predetermined device and output audio from the outputting unit on a basis of the received audio data.

An information processing method or a program according to the third embodiment of the present invention includes the steps of: performing control to display a selection screen used to make a selection as to whether to consent to view a predetermined content selected by a user of a predetermined device connected to the information processing device via a network while performing communication with the predetermined device when information on the predetermined content is transmitted from the predetermined device; and transmitting, to the predetermined device, information indicating that a user has made a selection to consent to view the predetermined content while performing communication with the predetermined device when the user has made the selection from the selection screen to consent to view the predetermined content while performing communication with the predetermined device.

In the first embodiment of the present invention, a list of devices selectable as other devices with which to perform communication while viewing a predetermined content is displayed when the predetermined content is selected from a list of contents, and when the second information processing device is selected from the displayed list of the devices, information on the predetermined content is transmitted to the second information processing device. When information indicating that a user of the second information processing device has consented to view the predetermined content while performing communication is transmitted from the second information processing device, a reservation to view the predetermined content while performing communication with the second information processing device is set.

In addition, in the first embodiment of the present invention, a selection screen used to make a selection as to whether to consent to view the predetermined content while performing communication with the first information processing device is displayed when information on the predetermined content selected by a user of the first information processing device is transmitted from the first information processing device, and information indicating that the user of the second information processing device has made a selection to consent to view the predetermined content while performing communication with the first information processing device is transmitted to the first information processing device when the user of the second information processing device has made the selection from the selection screen to consent to view the predetermined content while performing communication with the first information processing device.

In the second embodiment of the present invention, a list of devices selectable as other devices with which to perform communication while viewing a predetermined content is displayed when the predetermined content is selected from a list of contents, and when a predetermined device is selected from the displayed list of the devices, information on the predetermined content is transmitted to the predetermined device. When information indicating that a user of the predetermined device has consented to view the predetermined content while performing communication is transmitted from the predetermined device, a reservation to view the predetermined content while performing communication with the predetermined device is set.

In the third embodiment of the present invention, a selection screen used to make a selection as to whether to consent to view a predetermined content while performing communication with a predetermined device connected via a network is displayed when information on the predetermined content selected by a user of the predetermined device is transmitted from the predetermined device. Information indicating that a user has made a selection to consent to view the predetermined content while performing communication with the predetermined device is transmitted to the predetermined device when the user has made the selection from the selection screen to consent to view the predetermined content while performing communication with the predetermined device.

According to an embodiment of the present invention, a user can easily set a reservation to view a content while communication is performed between devices.

### BRIEF DESCRIPTION OF THE DRAWINGS

FIG. 1 is a diagram showing an example of configuration of a communication system according to one embodiment of the present invention;
FIG. 2 is a diagram showing an example of a screen displayed on a television receiving device 1-1;
FIG. 3 is a diagram showing an example of another screen displayed on the television receiving device 1-1;
FIG. 4 is a diagram showing an example of yet another screen displayed on the television receiving device 1-1;
FIG. 5 is a diagram showing an example of a screen displayed on the television receiving device 1-1;
FIG. 6 is a diagram showing an example of another screen displayed on the television receiving device 1-1;
FIG. 7 is a diagram showing an example of yet another screen displayed on the television receiving device 1-1;
FIG. 8 is a diagram showing an example of a screen displayed on a television receiving device 1-2;
FIG. 9 is a diagram showing an example of a screen displayed on the television receiving device 1-2;
FIG. 10 is a diagram showing an example of a screen displayed on the television receiving device 1-1;
FIG. 11 is a diagram showing an example of another screen displayed on the television receiving device 1-1;
FIG. 12 is a diagram showing an example of yet another screen displayed on the television receiving device 1-1;
FIG. 13 is a diagram showing an example of a screen displayed on the television receiving device 1-1;
FIG. 14 is a block diagram showing an example of hardware configuration of the television receiving device 1-1;
FIG. 15 is a diagram showing an example of buttons provided to a remote control 251;
FIG. 16 is a diagram showing an example of changing an audio output mode;
FIG. 17 is a block diagram showing an example of functional configuration of the television receiving device 1-1;
FIG. 18 is a flowchart of assistance in explaining a program sharing reservation setting process of the television receiving device 1-1;
FIG. 19 is a flowchart of assistance in explaining a program sharing reservation setting process of the television receiving device 1-2;
FIG. 20 is a flowchart of assistance in explaining a program sharing process of the television receiving device 1-1;
FIG. 21 is a block diagram showing an example of hardware configuration of an external device;
FIG. 22 is a flowchart of assistance in explaining a network adjustment process of the television receiving device 1-1;
FIG. 23 is a flowchart of assistance in explaining a network adjustment process of the television receiving device 1-2; and
FIG. 24 is a block diagram showing an example of configuration of a personal computer.

### DETAILED DESCRIPTION OF THE PREFERRED EMBODIMENTS

Preferred embodiments of the present invention will hereinafter be described. Correspondences between constitutional requirements of the present invention and embodiments described in the specification or the drawings are illustrated as follows. This description is to confirm that embodiments supporting the present invention are described in the specification or the drawings. Therefore, even when there is an embodiment described in the specification or drawings but not described here as an embodiment corresponding to a constitutional requirement of the present invention, it does not signify that the embodiment does not correspond to the constitutional requirement. Conversely, even when an embodiment is described here as corresponding to an invention, it does not signify that the embodiment does not correspond to constitutional requirements other than that constitutional requirement.

A communication system according to a first embodiment of the present invention includes a first information processing device and a second information processing device connected to each other via a network. Of these devices, the first information processing device has substantially the same configuration as an information processing device according to a second embodiment of the present invention, and the second information processing device has substantially the same configuration as an information processing device according to a third embodiment of the present invention.

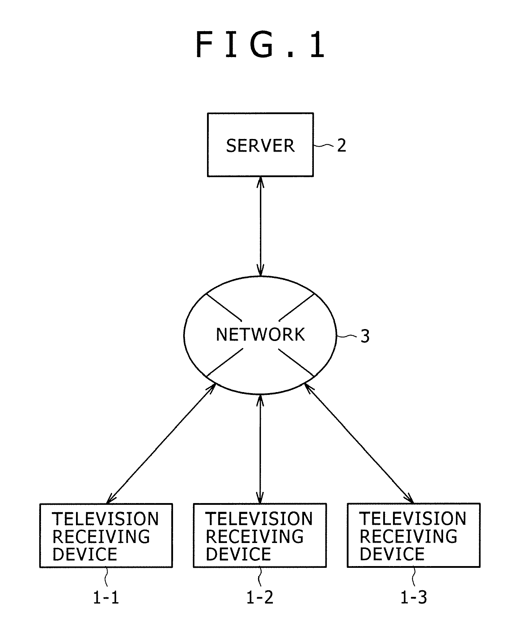

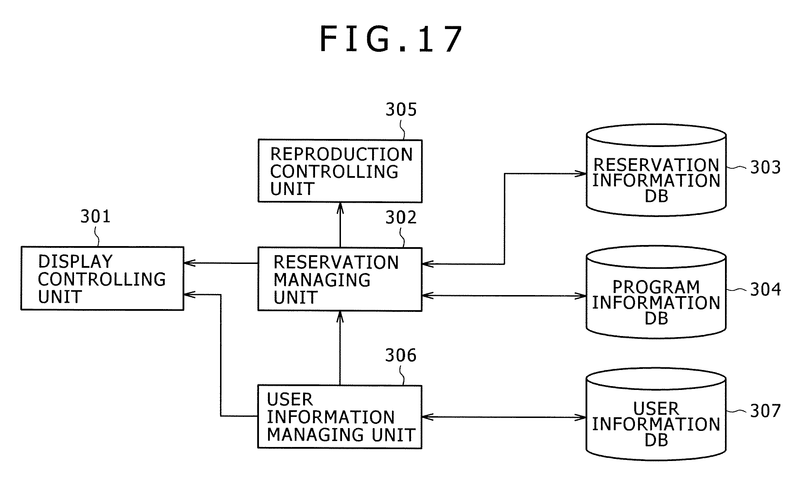

The information processing device according to the second embodiment of the present invention (television receiving device 1-1 in FIG. 1, for example) includes: a display controlling unit (display controlling unit 301 in FIG. 17 in the television receiving device 1-1, for example) for performing control to display a list of devices selectable as other devices with which to perform communication while viewing a predetermined content when the predetermined content is selected from a list of contents; and a setting unit (reservation managing unit 302 in FIG. 17 in the television receiving device 1-1, for example) for, when a predetermined device is selected from the list of the devices, the list being displayed by the display controlling unit, transmitting information on the predetermined content to the predetermined device, and when information indicating that a user of the predetermined device has consented to view the predetermined content while performing communication is transmitted from the predetermined device, setting a reservation to view the predetermined content while performing communication with the predetermined device.

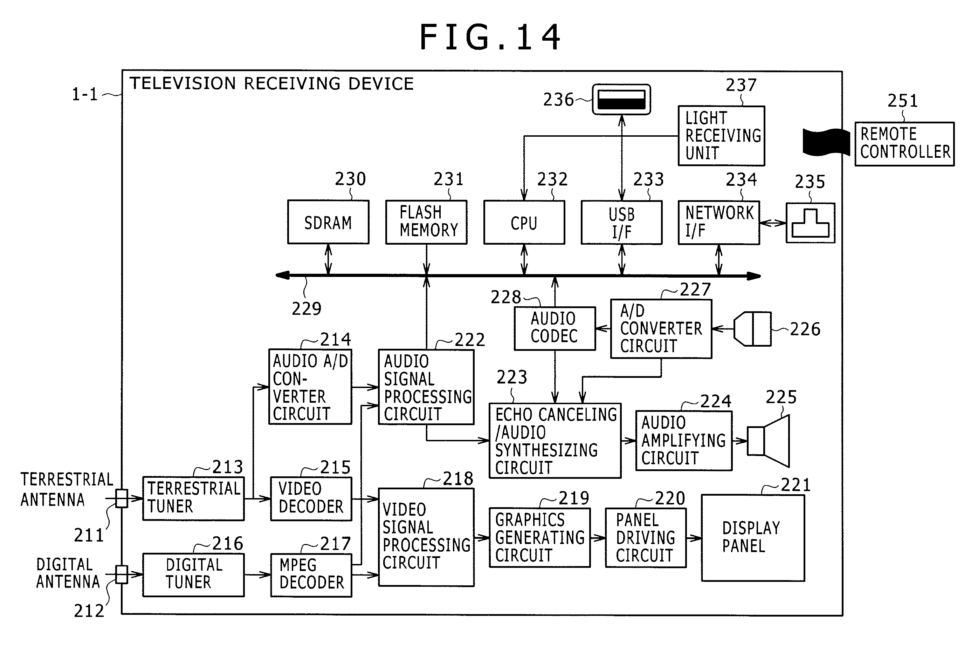

This information processing device can further include a communicating unit (network I/F 234 in FIG. 14 in the television receiving device 1-1, for example) for starting communication with the predetermined device according to the reservation set by the setting unit.

The information processing device can further include: an obtaining unit (microphone 226 in FIG. 14 in the television receiving device 1-1, for example) for obtaining audio data; and an outputting unit (speaker 225 in FIG. 14 in the television receiving device 1-1, for example) for outputting audio on a basis of the audio data.

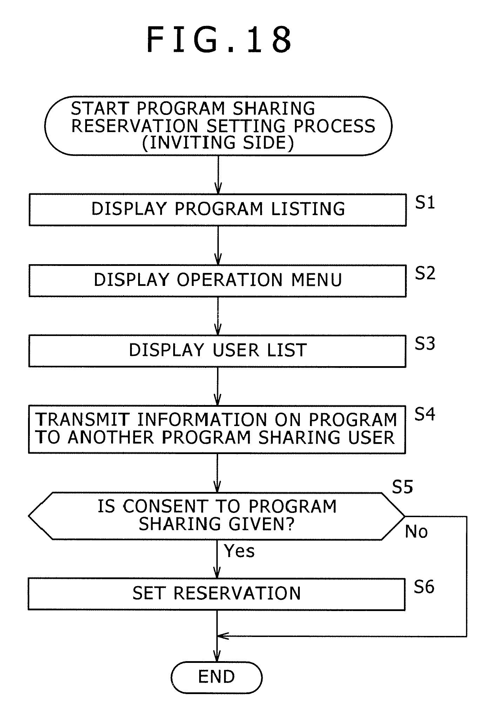

An information processing method or a program according to the second embodiment of the present invention includes the steps of: displaying a list of devices selectable as other devices with which to perform communication while viewing a predetermined content when the predetermined content is selected from a list of contents; and when a predetermined device is selected from the list of the devices, transmitting information on the predetermined content to the predetermined device, and when information indicating that a user of the predetermined device has consented to view the predetermined content while performing communication is transmitted from the predetermined device, setting a reservation to view the predetermined content while performing communication with the predetermined device (step S6 in FIG. 18, for example).

An information processing device according to a third embodiment of the present invention (television receiving device 1-2 in FIG. 1, for example) includes: a display controlling unit (display controlling unit 301 in FIG. 17 in the television receiving device 1-2, for example) for performing control to display a selection screen used to make a selection as to whether to consent to view a predetermined content selected by a user of a predetermined device connected to the information processing device via a network while performing communication with the predetermined device when information on the predetermined content is transmitted from the predetermined device; and a communicating unit (network I/F 234 in FIG. 14 in the television receiving device 1-2, for example) for transmitting, to the predetermined device, information indicating that a user has made a selection to consent to view the predetermined content while performing communication with the predetermined device when the user has made the selection from the selection screen to consent to view the predetermined content while performing communication with the predetermined device.

This information processing device can further include a setting unit (reservation managing unit 302 in FIG. 17 in the television receiving device 1-2, for example) for setting a reservation to view the predetermined content while performing communication with the predetermined device.

The information processing device can further include: an obtaining unit (microphone 226 in FIG. 14 in the television receiving device 1-2, for example) for obtaining audio data; and an outputting unit (speaker 225 in FIG. 14 in the television receiving device 1-2, for example) for outputting audio on a basis of the audio data.

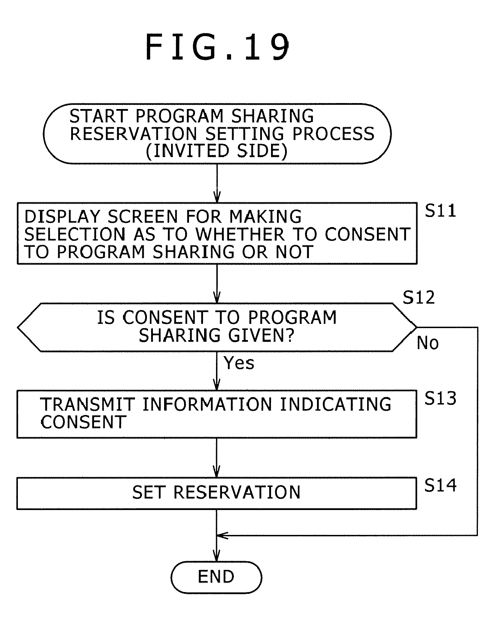

An information processing method or a program according to the third embodiment of the present invention includes the steps of: performing control to display a selection screen used to make a selection as to whether to consent to view a predetermined content selected by a user of a predetermined device connected to the information processing device via a network while performing communication with the predetermined device when information on the predetermined content is transmitted from the predetermined device; and transmitting, to the predetermined device, information indicating that a user has made a selection to consent to view the predetermined content while performing communication with the predetermined device when the user has made the selection from the selection screen to consent to view the predetermined content while performing communication with the predetermined device (step S13 in FIG. 19, for example).

Preferred embodiments of the present invention will hereinafter be described with reference to the drawings.

FIG. 1 is a diagram showing an example of configuration of a communication system according to one embodiment of the present invention.

As shown in FIG. 1, this communication system is formed by connecting television receiving devices 1-1 to 1-3 and a server 2 to each other via a network 3 composed of the Internet or the like. More than three television receiving devices may be connected to the network 3.

The television receiving devices 1-1 to 1-3 each have a microphone and a speaker. A television receiving device transmits data of voice of a user which data is captured by the microphone to a television receiving device set as another communication device at this time via the network 3, and outputs, from the speaker, voice of a user of the television device as the other communication device on the basis of data captured and transmitted via the network 3 by the television receiving device as the other communication device. That is, the television receiving devices 1-1 to 1-3 have a function for voice conversation based on VoIP.

In addition, the television receiving devices 1-1 to 1-3 have a function of receiving a program broadcast by terrestrial analog broadcasting, terrestrial digital broadcasting, or BS (Broadcasting Satellite)/CS (Communications Satellite) digital broadcasting, or a program distributed from a predetermined server via the network 3, and allowing a user to view the program.

Thus, by selecting a program to view and another user, the users of the television receiving devices 1-1 to 1-3 can view the program while having voice conversation based on VoIP with the specific user such as an acquaintance or the like.

For example, when the user of the television receiving device 1-1 selects the user of the television receiving device 1-2 as another user with whom to have a voice conversation, a communication via the network 3 is established between the television receiving device 1-1 and the television receiving device 1-2, and data of voice of both the users is transmitted and received through the established communication. In addition, both the devices receive a same program. Thereby the user of the television receiving device 1-1 and the user of the television receiving device 1-2 can view the same program while having conversation.

When the television receiving devices 1-1 to 1-3 do not need to be differentiated from each other, the television receiving devices 1-1 to 1-3 will hereinafter be referred to collectively as a television receiving device 1 as appropriate. In addition, viewing the same program while having voice conversation based on VoIP will be referred to as program sharing as appropriate.

The server 2 is a DNS (Domain Name System) server. The server 2 manages communications between the television receiving devices 1-1 and 1-2, between the television receiving devices 1-2 and 1-3, and between the television receiving devices 1-1 and 1-3.

For example, when the user of the television receiving device 1-1 and the user of the television receiving device 1-2 have voice conversation, the server 2 transmits the data of voice of the user of the television receiving device 1-1 which data is captured by the television receiving device 1-1 to the television receiving device 1-2 on the basis of for example information on a transmission destination described in the header of a packet storing the data, and conversely transmits the data of voice of the user of the television receiving device 1-2 which data is captured by the television receiving device 1-2 to the television receiving device 1-1 on the basis of for example information on a transmission destination described in the header of a packet storing the data.

Incidentally, each of the television receiving devices 1-1 to 1-3 may be given a global IP address, so that peer-to-peer communication is performed between the television receiving devices without the intervention of the server 2.

In the communication system having such a configuration, the user of the television receiving device 1 can set a reservation for program sharing in the television receiving device 1 that the user himself/herself uses. The reservation for program sharing is made by using a screen displayed by the television receiving device 1.

Description will be made below of the screen displayed by the television receiving device 1 which screen is used to set a reservation for program sharing and the like. Description in the following will be made of a case where the user of the television receiving device 1-1 proposes program sharing to the user of the television receiving device 1-2 (invites the user of the television receiving device 1-2 to program sharing) with a predetermined program to be broadcast as an object for the program sharing.

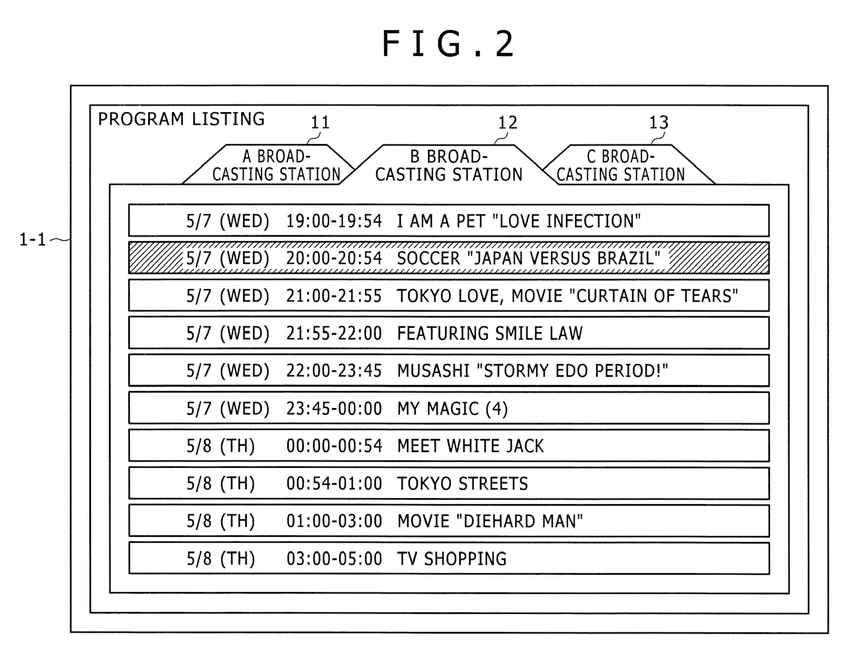

FIG. 2 is a diagram showing an example of a screen displayed on the television receiving device 1.

A tab 11 selected when attention is directed to "A Broadcasting Station", a tab 12 selected when attention is directed to "B Broadcasting Station", and a tab 13 selected when attention is directed to "C Broadcasting Station" are displayed on an upper side of the screen of FIG. 2. In the example of the screen of FIG. 2, the tab 12 is selected from among the tabs, and a list of programs to be broadcast by "B Broadcasting Station" is displayed.

That is, the communication system of FIG. 1 enables a reservation for program sharing to be set from a program listing of programs to be broadcast.

In the example of FIG. 2, the titles and broadcasting dates and times of programs are displayed in respective sections in ascending order of broadcasting start time with a present time as a reference. Attention is directed to a program "Soccer 'Japan versus Brazil"' whose information is displayed in the section of a second row from the top (a cursor is placed at the program and the program is highlighted). The user of the television receiving device 1-1 can change the program of interest by pressing an up button or a down button of a remote control and thereby moving the cursor.

In addition, by pressing a tool button of the remote control, the user of the television receiving device 1-1 can display a menu of operations that can be performed on a program to which attention is directed at this time. Buttons provided to the remote control will be described later in detail.

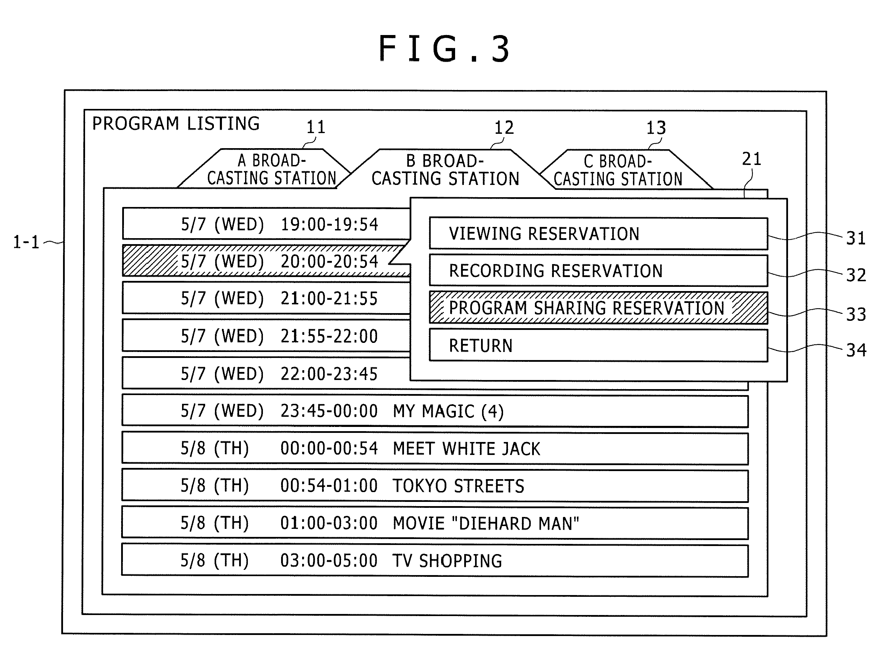

FIG. 3 is a diagram showing an example of a screen displayed on the television receiving device 1-1 when the tool button has been pressed in the state of FIG. 2 in which attention is directed to the program "Soccer 'Japan versus Brazil'".

When the tool button has been pressed in the state of FIG. 2, as shown in FIG. 3, a menu 21 is displayed with the section of the program of interest "Soccer 'Japan versus Brazil"' as a balloon source. In the example of FIG. 3, four sections 31 to 34 are displayed in the menu 21, and for example an operation selectable by the user for the program "Soccer 'Japan versus Brazil"' is displayed in each of the sections.

The section 31 displays "viewing reservation" for an operation selected to set a reservation to view the program "Soccer 'Japan versus Brazil"'. The section 32 displays "recording reservation" for an operation selected to set a reservation to record the program "Soccer 'Japan versus Brazil"'. The section 33 displays "program sharing reservation" for an operation selected to set a reservation for program sharing. The section 34 displays "return" for an operation selected to close the menu 21 and return to the state of the screen of FIG. 2.

The user of the television receiving device 1-1 changes a section of interest by pressing the up button or the down button of the remote control, and then presses an Enter button. The user of the television receiving device 1-1 can thereby select an operation displayed in a section to which attention is directed at this time. In the example of FIG. 3, attention is directed to "program sharing reservation", and the user presses the Enter button in this state. The user can thereby select the program "Soccer 'Japan versus Brazil"' as an object program for program sharing.

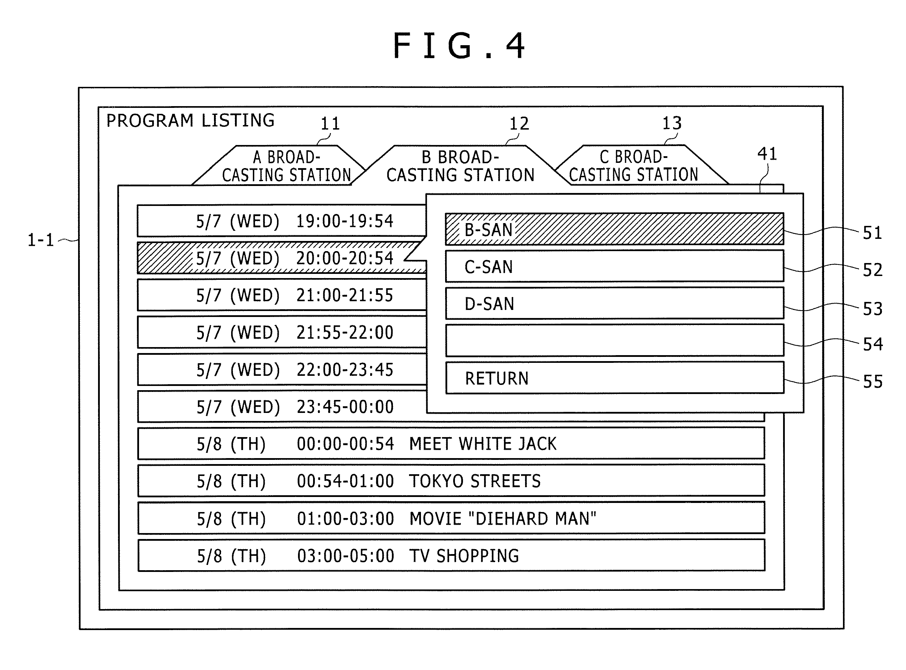

FIG. 4 is a diagram showing an example of a screen displayed on the television receiving device 1-1 when the Enter button has been pressed in the state of FIG. 3.

When the Enter button has been pressed in the state of FIG. 3, as shown in FIG. 4, a menu 41 is displayed in place of the menu 21 that has previously been displayed. A list of names of users registered in advance by the user of the television receiving device 1-1 is displayed in the menu 41. In the example of FIG. 4, five sections 51 to 55 are provided in the menu 41.

In the example of FIG. 4, "B-san", "C-san", and "D-san" are displayed as the names of users in the sections 51 to 53, respectively. Description in the following will be made supposing that the user of the television receiving device 1-1 in FIG. 1 (the user viewing the screen of FIG. 4 and the like) is a user A, that the user of the television receiving device 1-2 is a user B, and that the user of the television receiving device 1-3 is a user C.

That is, in the example of FIG. 4, the user A has registered in advance information on the user B as the user of the television receiving device 1-2, information on the user C as the user of the television receiving device 1-3, and information on the user D as information on other users for program sharing. When the information on the other users for program sharing is registered, information such as an IP telephone number for identifying a television receiving device used by another user and establishing communication when voice conversation based on VoIP is started is also registered. Such information is associated with the names of the users.

In the example of FIG. 4, the section 54 in the menu 41 is a blank section. By pressing the tool button in a state in which attention is directed to the section 54, the user A can have a menu displayed for registering new information on another user for program sharing. "Return" for an operation selected to close the menu 41 and return to the state of the screen of FIG. 3 is displayed below the section 54.

The user of the television receiving device 1-1 changes a section of interest by pressing the up button or the down button of the remote control, and then presses the Enter button. The user of the television receiving device 1-1 can thereby select a user whose name is displayed in a section to which attention is directed at this time as another user for program sharing. In the example of FIG. 4, attention is directed to the section 51 displaying "B-san".

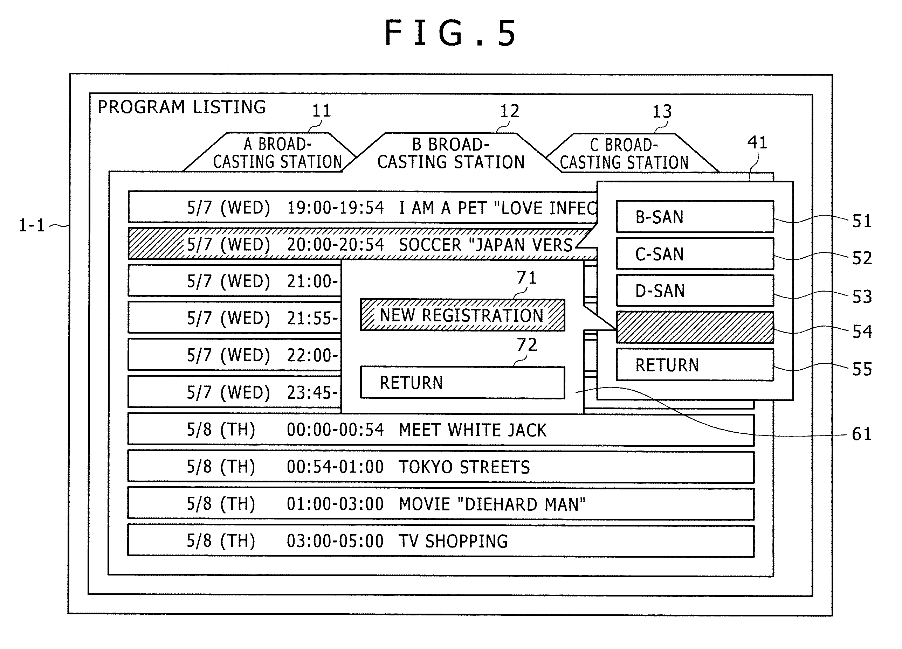

FIG. 5 is a diagram showing an example of a screen displayed on the television receiving device 1-1 when the tool button of the remote control has been pressed in a state of attention being directed to the section 54 (blank section) in the menu 41.

When the tool button has been pressed in the state of attention being directed to the section 54 in the menu 41, as shown in FIG. 5, a menu 61 is displayed with the section 54 as a balloon source. In the example of FIG. 5, "new registration" for an operation selected to register new information on a user for program sharing is displayed in a section 71 in the menu 61, and "return" for an operation selected to close the menu 61 and return to the state of the screen of FIG. 4 is displayed in a section 72.

The user A can select "new registration" from the menu 61, and register information such as the name of a user to be newly registered, an IP telephone number of a device used by the user, and the like.

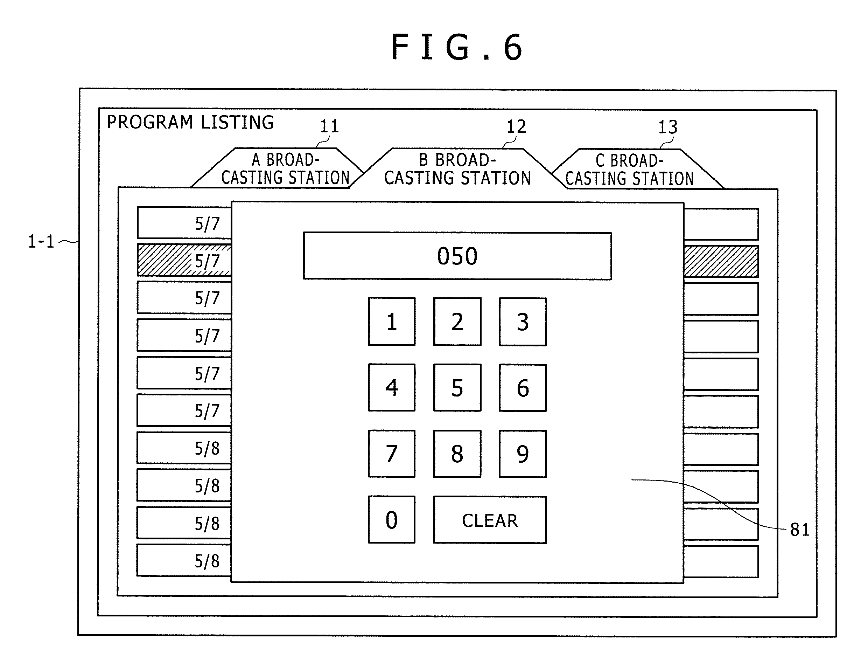

FIG. 6 is a diagram showing an example of a screen used when an IP telephone number is registered. For example, the screen of FIG. 6 is displayed after the name of the user to be newly registered is input.

In the example of FIG. 6, an input key 81 provided with a numeric keypad, a Clear button, and a display unit for already input figures is displayed in a state of being superimposed on the program listing. The user A can input an IP telephone number from the input key 81 by performing operations using the remote control such as moving a pointer (not shown) onto a predetermined button and pressing the Enter button. Incidentally, when the name of a user is input or an electronic mail address rather than an IP telephone number is input, the input key 81 displays a software keyboard used to input alphabetical and kana characters.

The names of users registered using such a screen are displayed in the menu 41 in FIG. 4. Thus, information on users that needs to be registered is only user names and IP telephone numbers or electronic mail addresses to reduce complexity of registration.

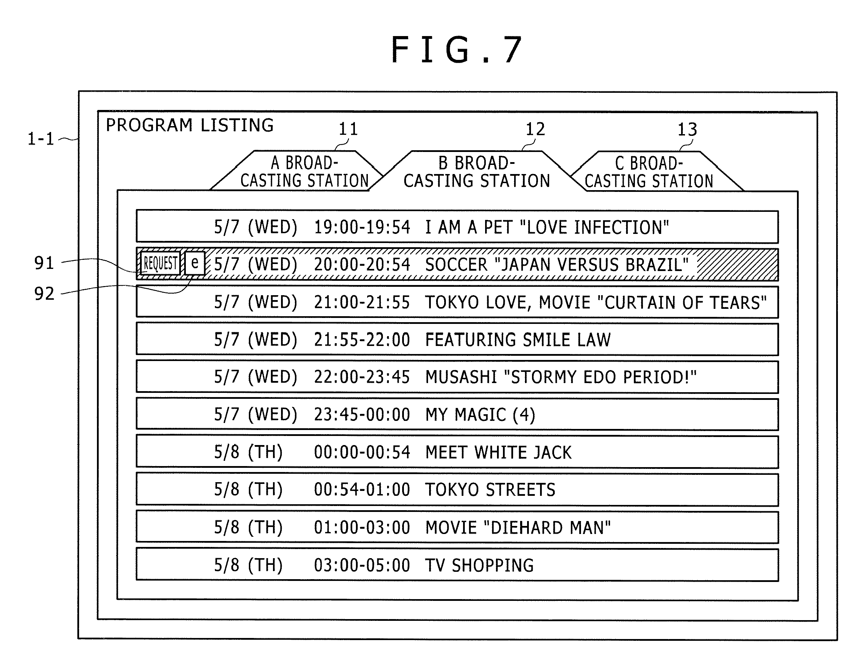

FIG. 7 is a diagram showing an example of a screen displayed on the television receiving device 1-1 when the Enter button of the remote control has been pressed in a state of attention being directed to the section 51 in FIG. 4 and thus a selection is made to share the program "Soccer 'Japan versus Brazil"' with "B-san" (user B).

In the example of FIG. 7, icons 91 and 92 are displayed at a left end of the section displaying information on the program "Soccer 'Japan versus Brazil"'. The icon 91 indicates that in a present state related to program sharing, consent to share the program "Soccer 'Japan versus Brazil'" is being requested from the other user (user B). The icon 91 shows letters "request" in the state of FIG. 7. On the other hand, the icon 92 indicates that the program "Soccer 'Japan versus Brazil"' is selected as an object for program sharing. The icon 92 shows an alphabetical letter "e" in the example of FIG. 7.

When the user A chooses to share the program "Soccer 'Japan versus Brazil"' with "B-san", the television receiving device 1-1 displays the screen as described above, reads identifying information (information such as an IP telephone number or the like) for identifying the television receiving device 1-2, which information is managed as information on the user B, and transmits information indicating an invitation by the user A to the program sharing to the television receiving device 1-2 used by the user B via the server 2 or directly from the television receiving device 1-1 on the basis of the read identifying information.

At this time, identifying information for identifying the program "Soccer 'Japan versus Brazil"' selected as an object program for the program sharing, information on the broadcasting station, information on the television receiving device 1-1 and the user A using the television receiving device 1-1, information on the television receiving device 1-2 and the user B using the television receiving device 1-2, information on an audio codec used in VoIP implementing voice conversation, or the like is also transmitted to the television receiving device 1-2.

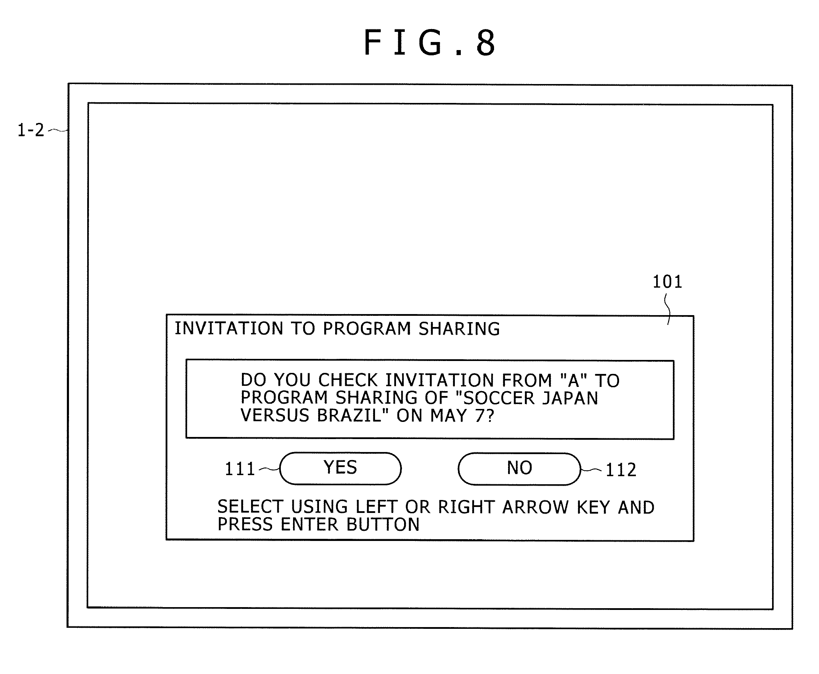

FIG. 8 is a diagram showing an example of a screen displayed on the television receiving device 1-2.

When the user A chooses to perform the program sharing with the user B as the other user, and the user B is viewing a program, a window 101 is displayed in a state of being superimposed on an image of the program on the television receiving device 1-2 being used by the user B, as shown in FIG. 8.

In the example of FIG. 8, a title "invitation to program sharing" indicating that an invitation to program sharing is received is displayed on an upper side of the window 101, and a message "Do you check an invitation to program sharing of 'Soccer Japan versus Brazil' on May 7 from 'A'?" is displayed below the title. The part "A" and the part "Soccer Japan versus Brazil" in the message are displayed on the basis of the information transmitted from the television receiving device 1-1, for example.

Displayed under the message are a button 111 showing letters "yes" which button is operated to check information on the object program and a button 112 showing letters "no" which button is operated to choose not to perform program sharing without checking the information on the program. The user B can choose from the screen of FIG. 8 to check the information on the program and consent to the program sharing or not to consent to the program sharing.

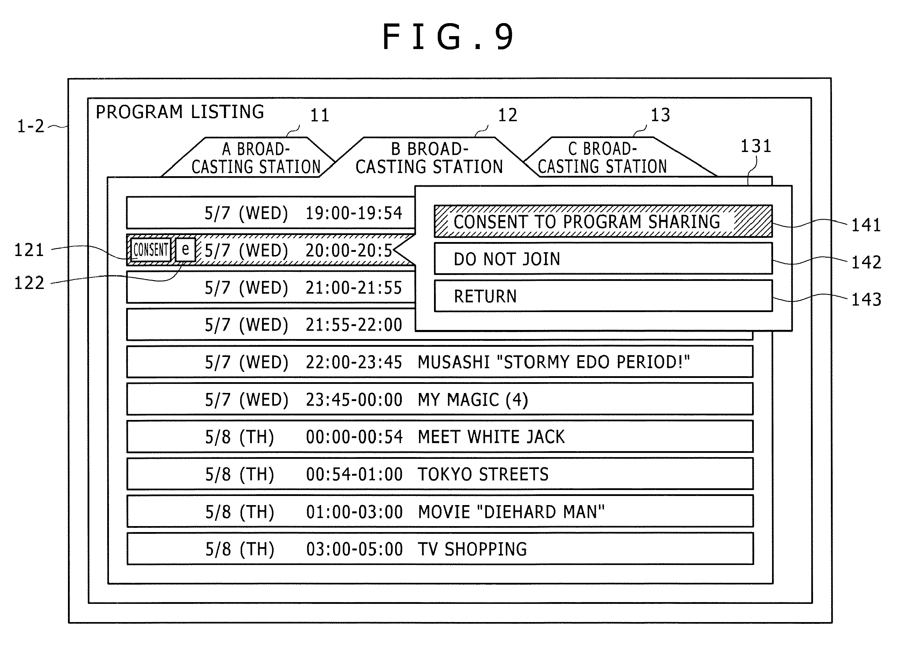

FIG. 9 is a diagram showing an example of a screen displayed on the television receiving device 1-2 when the button 111 has been pressed in the state of FIG. 8 and thus the user B chooses to check the information on the program "Soccer 'Japan versus Brazil"'.

When the button 111 has been pressed in the state of FIG. 8, as shown in FIG. 9, the television receiving device 1-2 displays a program listing including the information on the program selected by the user A as object for the program sharing, that is, the same program listing as the program listing displayed on the television receiving device 1-1 when the user selected the program as object for the program sharing.

In the example of FIG. 9, among a tab 11 selected when attention is directed to "A Broadcasting Station", a tab 12 selected when attention is directed to "B Broadcasting Station", and a tab 13 selected when attention is directed to "C Broadcasting Station", the tab 12 is selected, and a program listing of "B Broadcasting Station" including the information on the program "Soccer 'Japan versus Brazil"' selected by the user A as object for the program sharing is displayed.

In addition, attention is directed to the section of the program "Soccer 'Japan versus Brazil"' selected by the user A as object for the program sharing among programs displayed in the list, and icons 121 and 122 are displayed on the left side of the section. The icon 121 indicates that in a present state related to the program sharing, consent to share the program "Soccer 'Japan versus Brazil'" is being requested by the other user (user A). The icon 121 shows letters "consent" in the state of FIG. 9. The icon 122 indicates that the program "Soccer 'Japan versus Brazil"' is selected as object for the program sharing. The icon 122 shows an alphabetical letter "e" in the example of FIG. 9.

Further, in the example of FIG. 9, a menu 131 is displayed with the section of the program "Soccer 'Japan versus Brazil"' to which attention is directed as a balloon source. The menu 131 displays "consent to program sharing" selected to share the program "Soccer 'Japan versus Brazil"' with the user A, that is, to consent to the program sharing in response to the invitation from the user A in a section 141. "Do not join", which is selected not to accept the invitation from the user A and not to consent to the program sharing, is displayed in a section 142. "Return" for an operation selected to close the menu 131 is displayed in a section 143 below the section 142.

The user B changes a section of interest by pressing the up button or the down button of the remote control, and then presses the Enter button. The user B can thereby choose whether to consent to the program sharing or not.

Thus, when the invitation is received from the user A, the program listing is displayed, whereby the user B from whom consent is requested can immediately check the object program.

Information indicating a selection by the user B (as to whether to consent or not) is transmitted to the television receiving device 1-1 via the server 2 or directly from the television receiving device 1-2. At this time, information on the television receiving device 1-2 as information transmitting source and the like are also transmitted to the television receiving device 1-1.

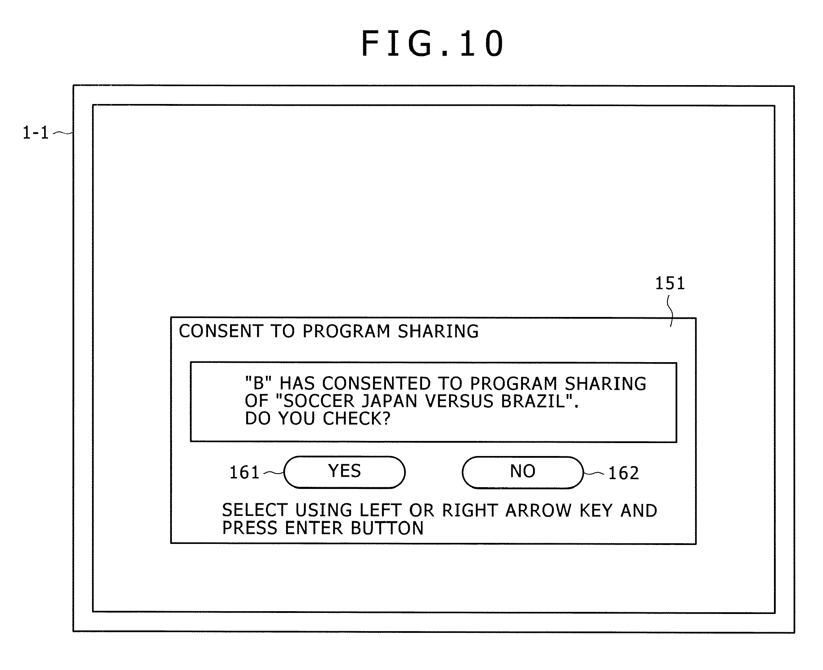

FIG. 10 is a diagram showing an example of a screen displayed on the television receiving device 1-1 when the user B consents to the program sharing, and information indicating that the user B has consented to the program sharing has been transmitted from the television receiving device 1-2.

For example, when the user A is viewing a program while waiting for the consent of the user B, the television receiving device 1-1 displays a window 151 superimposed on the image of the program in response to the information transmitted from the television receiving device 1-2, as shown in FIG. 10.

In the example of FIG. 10, a title "consent to program sharing" indicating that consent to the program sharing is given is displayed on an upper side of the window 151, and a message " 'B' has consented to program sharing of 'Soccer Japan versus Brazil'. Do you check?" is displayed below the title. The part "B" in the message is displayed on the basis of the information transmitted from the television receiving device 1-2, for example.

Displayed under the message are a button 161 showing letters "yes" which button is operated to check information on the object program and a button 162 showing letters "no" which button is operated not to check the information. The user A can choose from the screen of FIG. 10 whether to check the information on the program or not.

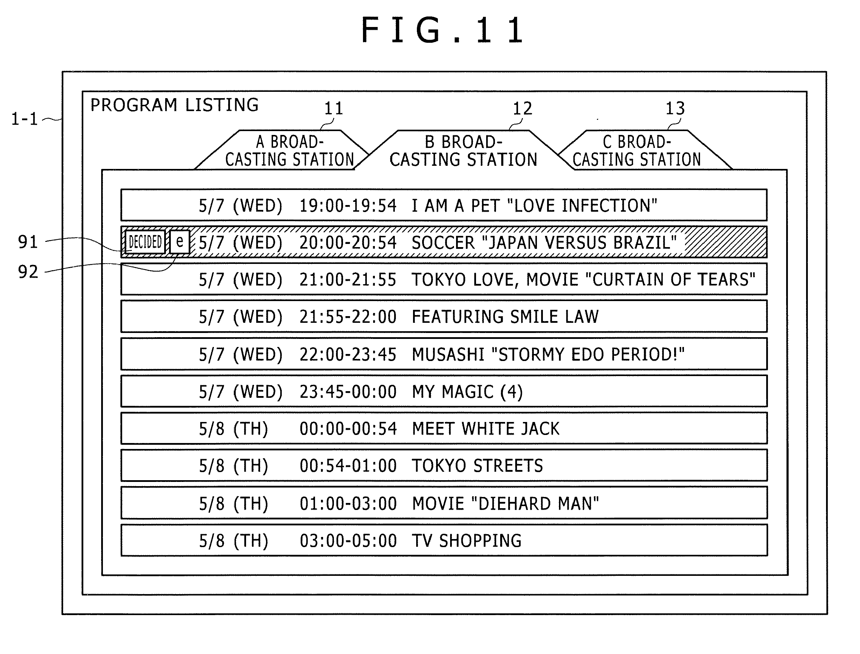

FIG. 11 is a diagram showing an example of a screen displayed on the television receiving device 1-1 when the button 161 has been pressed in the state of FIG. 10 and thus the user A chooses to check the information on the program.

The screen shown in FIG. 11 is the same screen as the screen of FIG. 7 except that the letters shown in the icon 91 are changed. That is, in the state of FIG. 11, the icon 91 is changed to letters of "decided", thereby indicating that it has been decided to perform the program sharing with the program "Soccer 'Japan versus Brazil"' as object for the program sharing.

When it has been decided to perform the program sharing, the television receiving device 1-1 sets a reservation for the program sharing with the user B with the program "Soccer 'Japan versus Brazil'" as object for the program sharing. When the reservation is set, the television receiving device 1-1 repeats determination of whether a present time has become a time near a broadcasting start time of the program (for example a time a predetermined time such as five minutes or the like before the broadcasting start time).

In addition, the television receiving device 1-2 used by the user B also sets a reservation for the program sharing with the user A with the program "Soccer 'Japan versus Brazil"' as object for the program sharing. When the reservation is set, the television receiving device 1-2 also repeats the determination of whether the present time has become the time near the broadcasting start time of the program.

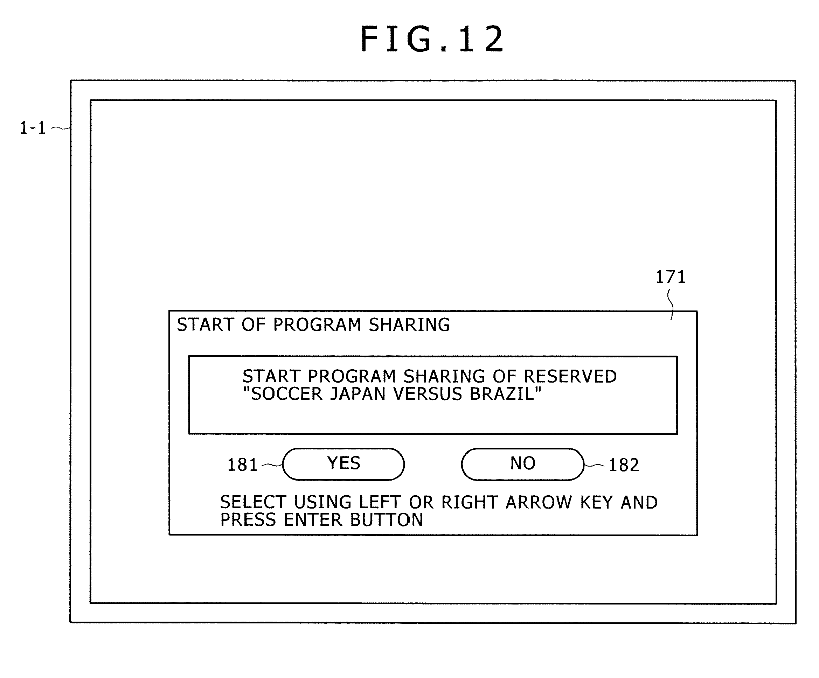

FIG. 12 is a diagram showing an example of a screen displayed on the television receiving device 1-1 when the television receiving device 1-1 determines that the present time has become the time near the broadcasting start time of the program.

When the television receiving device 1-1 determines that the present time has become the time near the broadcasting start time of the program, as shown in FIG. 12, the television receiving device 1-1 displays a window 171. When the television receiving device 1-1 is in a standby state in which power to the television receiving device 1-1 is off, the power is turned on, and the window 171 is displayed on the screen immediately after the turning on of the power.

In the example of FIG. 12, a title "start of program sharing" indicating a start of the program sharing is displayed on an upper side of the window 171, and a message "Start program sharing of reserved 'Soccer Japan versus Brazil"' is displayed below the title.

Displayed under the message are a button 181 showing letters "yes" which button is operated to start the program sharing and a button 182 showing letters "no" which button is operated not to start the program sharing. The user A can choose from the screen of FIG. 12 whether to start the program sharing or not.

When the button 181 is pressed to give an instruction to start the program sharing, communication is established between the television receiving device 1-1 and the television receiving device 1-2 used by the user B according to the set reservation so as to enable voice conversation based on VoIP. In addition, reception of the broadcast of the B broadcasting station is started to display the program "Soccer 'Japan versus Brazil'" as object for the program sharing.

Incidentally, the screen shown in FIG. 12 is displayed also on the television receiving device 1-2 as the device that received the invitation to the program sharing. The communication may be established after selection is made to start the program sharing on both the devices.

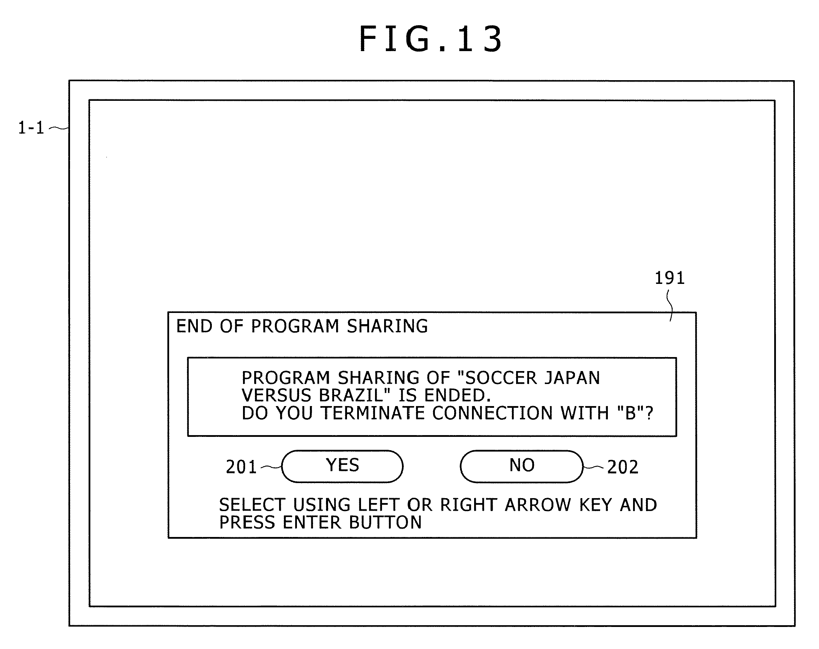

FIG. 13 is a diagram showing an example of a screen displayed on the television receiving device 1-1 when the broadcasting of the object program is ended.

When the broadcasting of the program "Soccer 'Japan versus Brazil"' as object for the program sharing is ended, as shown in FIG. 13, the television receiving device 1-1 displays a window 191 superimposed on the image of the program being displayed at this time.

In the example of FIG. 13, a title "end of program sharing" indicating an end of the program sharing is displayed on an upper side of the window 191, and a message "Program sharing of 'Soccer Japan versus Brazil' is ended. Do you terminate connection with 'B'?" is displayed below the title.

Displayed under the message are a button 201 showing letters "yes" which button is operated to disconnect the communication established between the television receiving device 1-1 and the television receiving device 1-2 and end the voice conversation with the user B and a button 202 showing letters "no" which button is operated not to disconnect the communication yet and continue the voice conversation. The user A can choose from the screen of FIG. 13 whether to end the voice conversation or not.

The screen shown in FIG. 13 is displayed also on the television receiving device 1-2 as the device that received the invitation to the program sharing. For example, when a selection is made to end the voice conversation on one of the devices, the communication is disconnected, and the program sharing is ended.

Thus, the communication system of FIG. 1 enables the user to easily set a reservation for program sharing from a program listing using the remote control. In addition, the starting of reception of a program selected as object for program sharing and the establishing of communication with the device used by another program sharing user can be performed automatically.

Thereby the user does not need to make arrangements for program sharing by telephone, electronic mail or the like, and even when the program sharing is actually started, it is not necessary for the user himself/herself to set a receiving channel and make a call based on VoIP to the device of the other user. In addition, since a reservation for the program sharing can be set, the user does not need to look for the other program sharing user while viewing the program or immediately before the broadcasting of the program is started.

Basically, by merely selecting a predetermined program from a program listing and selecting another program sharing user, a request to the other user for consent to program sharing is automatically made by the device, and a reservation is set when the consent is obtained. Therefore the reservation itself for the program sharing can be set easily. The user may feel reluctant or hesitant to directly make a call or exchange electronic mail to request something from another user even when the other user with whom to perform program sharing is a close acquaintance or the like. Therefore, by thus making arrangements for program sharing mechanically, so to speak, such feelings can be suppressed.

Incidentally, while the above description supposes that program sharing is performed between only the user of the television receiving device 1-1 and the user of the television receiving device 1-2, program sharing may be performed between three or more users so that the program sharing is performed including the user of the television receiving device 1-3.

When the user of the television receiving device 1 for example selects a plurality of users from the menu 41 in FIG. 4 and can obtain consent for program sharing from the plurality of users, the user of the television receiving device 1 can set a reservation for program sharing among the three or more users. When the broadcasting of a program selected as object for the program sharing is started, the television receiving devices used by all the users participating in the program sharing start receiving the same program, and communication is established between the television receiving devices so as to enable voice conversation.

The voice of one user is transmitted to the devices used by all the other users. Thereby all the users participating in the program sharing can view the same program while enjoying voice conversation.

A series of operations of the television receiving device 1 for making screen display as described above and setting a reservation for program sharing, and realizing program sharing according to the set reservation will be described later with reference to flowcharts.

FIG. 14 is a block diagram showing an example of hardware configuration of the television receiving device 1-1.

The television receiving device 1-1 has an antenna input terminal 211 supplied with a signal from an antenna for receiving a terrestrial analog broadcast and an antenna input terminal 212 supplied with a signal from an antenna for receiving a digital broadcast (a terrestrial digital broadcast or a BS/CS digital broadcast). The television receiving device 1-1 may be provided with only one of the terminals.

A terrestrial tuner 213 receives and demodulates a broadcast wave signal input to the antenna input terminal 211, and thereby obtains a video signal and an audio signal. The terrestrial tuner 213 outputs the obtained audio signal to an audio A/D (Analog/Digital) converter circuit 214, and outputs the video signal to a video decoder 215.

The audio A/D converter circuit 214 subjects the audio signal supplied from the terrestrial tuner 213 to A/D conversion processing, and then outputs a resulting digital audio signal to an audio signal processing circuit 222.

The video decoder 215 decodes the video signal supplied from the terrestrial tuner 213, and then outputs resulting digital component signals to a video signal processing circuit 218.

The digital tuner 216 receives and demodulates a broadcast wave signal input to the antenna input terminal 212, and thereby obtains an MPEG-TS (Moving Picture Experts Group-Transport Stream). The digital tuner 216 outputs the obtained MPEG-TS to an MPEG decoder 217.

The MPEG decoder 217 descrambles the MPEG-TS supplied from the digital tuner 216, and thereby extracts a stream including data of a program to be reproduced (to be viewed). The MPEG decoder 217 decodes audio packets forming the extracted stream, and then outputs resulting audio data to the audio signal processing circuit 222. Also, the MPEG decoder 217 decodes video packets forming the stream, and then outputs resulting video data to the video signal processing circuit 218.

In addition, the MPEG decoder 217 outputs EPG (Electronic Program Guide) data extracted from the MPEG-TS to a CPU (Central Processing Unit) 232 via a path not shown in the figure.

The video signal processing circuit 218 subjects the video data supplied from the video decoder 215 or the video data supplied from the MPEG decoder 217 to predetermined processing such as noise removal and the like. The video signal processing circuit 218 outputs resulting video data to a graphics generating circuit 219.

The graphics generating circuit 219 generates the video data of the program displayed on a display panel 221, and then outputs the generated video data to a panel driving circuit 220. In addition, the graphics generating circuit 219 generates video data (graphic) for displaying a screen to be used by a user to select an item, for example, and outputs video data obtained by superimposing the video data (graphic) on the video data of the program to the panel driving circuit 220. A user interface including the program listing, the menu showing a list of users, the messages and the like as described above is implemented on the basis of the data generated by this graphics generating circuit 219.

The panel driving circuit 220 drives the display panel 221 on the basis of the data supplied from the graphics generating circuit 219 to display the video of the program and various screens as described above on the display panel 221.

The display panel 221 is formed by an LCD (Liquid Crystal Display) or the like. The display panel 221 displays the video of the program and the like under control of the panel driving circuit 220.

The audio signal processing circuit 222 subjects the audio data supplied from the audio A/D converter circuit 214 or the audio data supplied from the MPEG decoder 217 to predetermined processing such as noise removal and the like. The audio signal processing circuit 222 outputs resulting audio data to an echo canceling/audio synthesizing circuit 223.

The echo canceling/audio synthesizing circuit 223 outputs the audio data supplied from the audio signal processing circuit 222 to an audio amplifying circuit 224 so that the audio of the program is output from a speaker 225. When program sharing is performed, the echo canceling/audio synthesizing circuit 223 is not only supplied with the audio data of the program from the audio signal processing circuit 222 but also supplied with the audio data of another program sharing user from an audio codec 228 via the network 3. Further, when the audio data of the user (user A) of the television receiving device 1-1 is supplied from an A/D converter circuit 227, the echo canceling/audio synthesizing circuit 223 performs echo cancellation on the audio data of the user A. In addition, the echo canceling/audio synthesizing circuit 223 synthesizes the audio of the user A which audio results from the echo cancellation, the audio of the other program sharing user, and the audio of the program with each other according to an audio mode selected at this time. The echo canceling/audio synthesizing circuit 223 outputs audio data obtained by the synthesis to the audio amplifying circuit 224.

The audio amplifying circuit 224 subjects the audio data supplied from the echo canceling/audio synthesizing circuit 223 to D/A conversion processing and amplification processing, thereby adjusts the audio data to a predetermined sound volume, and then outputs the audio from the speaker 225.

The A/D converter circuit 227 receives a signal of voice of the user captured by a microphone 226 provided for voice conversation in the television receiving device 1-1, and subjects the received audio signal to A/D conversion processing. The A/D converter circuit 227 outputs digital audio data obtained by the A/D conversion processing to the echo canceling/audio synthesizing circuit 223 and the audio codec 228.

The audio codec 228 converts the audio data supplied from the A/D converter circuit 227 into data in a predetermined format for transmission via the network 3. The audio codec 228 outputs the data in the predetermined format to a network I/F 234 via an internal bus 229.

The internal bus 229 is connected with an SDRAM (Synchronous Dynamic Random Access Memory) 230, a flash memory 231, the CPU 232, a USB (Universal Serial Bus) I/F 233, and the network I/F 234.

The SDRAM 230 stores various data necessary for the CPU 232 to perform processing.

The flash memory 231 stores a program to be executed by the CPU 232. The CPU 232 reads the program stored in the flash memory 231 in predetermined timing such for example as at a time of starting the television receiving device 1-1. The flash memory 231 also stores EPG data obtained via digital broadcasting, EPG data obtained from a predetermined server via the network 3, and the like.

The CPU 232 executes the program stored in the flash memory 231, and controls the operation of the whole of the television receiving device 1-1 according to control code or the like supplied from a light receiving unit 237. The CPU 232 is connected to various parts of the television receiving device 1-1 via paths not shown in the figure.

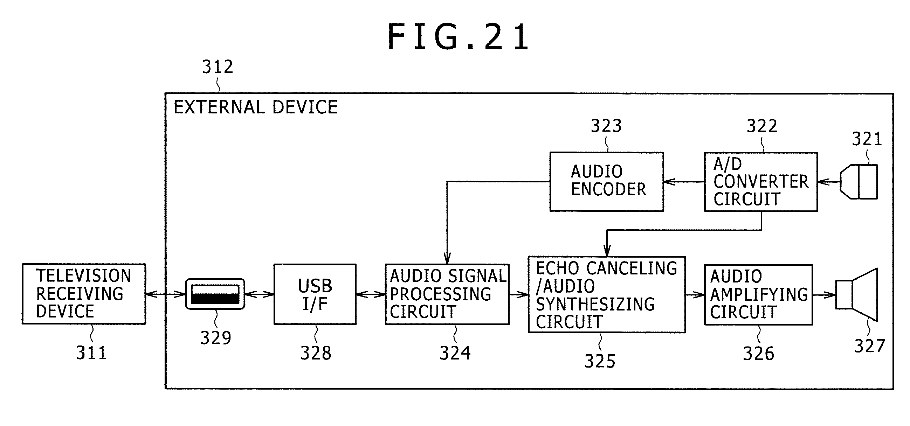

The USB I/F 233 transmits and receives data to and from a device external to the television receiving device 1-1, the device external to the television receiving device 1-1 being connected via a USB cable attached to a USB terminal 236. Incidentally, the USB I/F 233 and the USB terminal 236 are necessary when an external device to be described later (FIG. 21) including functions of capturing and outputting audio, for example, is attached to the television receiving device 1-1, and thus are not necessarily required in the configuration of the television receiving device 1-1 shown in FIG. 14 including the configuration of the external device.

The network I/F 234 is connected to the network 3 via a cable attached to a network terminal 235, and transmits and receives data to and from various devices connected to the network 3. When audio data is supplied from a television receiving device used by another program sharing user to the network I/F 234, the network I/F 234 outputs the audio data to the audio codec 228 via the internal bus 229. In addition, when the audio data of the user A is supplied from the audio codec 228 to the network I/F 234 via the internal bus 229, the network I/F 234 transmits the audio data to the television receiving device used by the other program sharing user via the network 3.

The light receiving unit 237 receives infrared rays from a remote control 251, and outputs control code describing a user operation, which control code is obtained by demodulation, to the CPU 232.

The television receiving devices 1-2 and 1-3 have the same configuration as described above. Description will hereinafter be made citing the configuration of the television receiving device 1-1 shown in FIG. 14 as the configuration of the television receiving device 1-2 or 1-3 as appropriate.

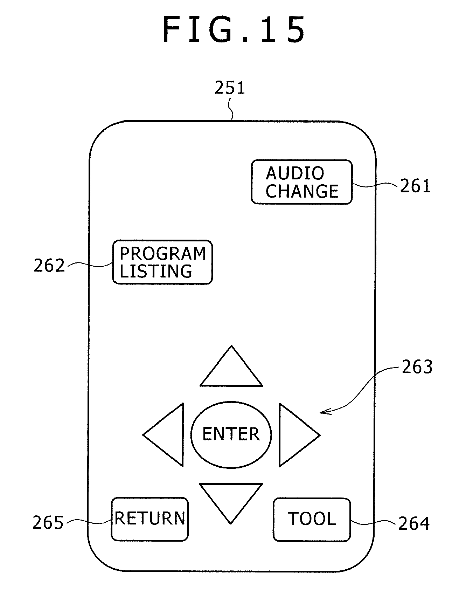

FIG. 15 is a diagram showing an example of buttons provided to the remote control 251. FIG. 15 shows only main buttons used for setting a reservation for program sharing and the like.

As shown in FIG. 15, the remote control 251 has an audio change button 261 operated to change the mode of audio output from the speaker 225 of the television receiving device 1, a program listing button 262 operated to display a program listing, and buttons 263 including an up button, a down button, a left button, and a right button operated to move a cursor and thereby change an item to which attention is directed and an Enter button operated to determine the item.

The remote control 251 also has a tool button 264 operated, when attention is directed to one program displayed in the program listing, to display for example a menu of operations that can be performed on the program, and a return button 265 operated to return to an immediately previous menu.

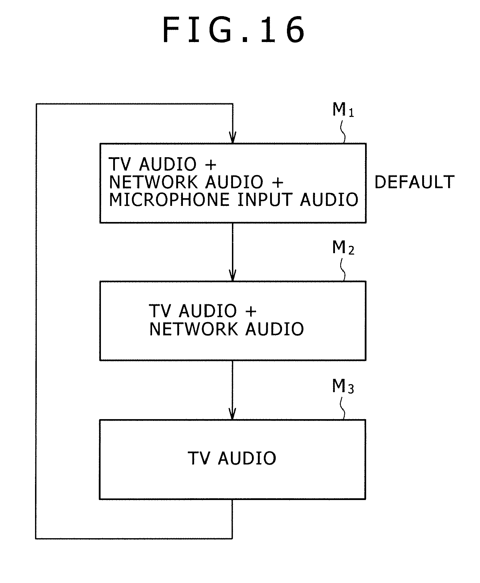

FIG. 16 is a diagram showing an example of audio output modes one of which is set each time the audio change button 261 is pressed.

As shown in FIG. 16, three modes M1 to M3, for example, are defined as audio output modes of the television receiving device 1. The modes are sequentially set each time the audio change button 261 is pressed.

In the example of FIG. 16, in the mode M1, the audio of the program, the voice of another program sharing user which data is transmitted via the network 3, and the voice of the user using the own device which voice is collected by the microphone 226 are synthesized with each other and then output from the speaker 225, and the voice data of the user using the own device is transmitted to a television receiving device used by the other program sharing user. In the example of FIG. 16, this mode M1 is a default mode. The mode M1 is also set when the audio change button 261 is pressed once in a state of the mode M3 being set.

In the mode M2, the audio of the program and the voice of the other program sharing user which data is transmitted via the network 3 are synthesized with each other and then output from the speaker 225. When this mode M2 is set, the voice data of the user using the own device is not transmitted to the television receiving device used by the other program sharing user, so that the other program sharing user cannot hear the voice of the user using the own device. The user selects the mode M2 when for example preventing the voice on the user side from being heard by the other program sharing user. The mode M2 is set when the audio change button 261 is pressed once in a state of the mode M1 being set.

In the mode M3, only the audio of the program is output from the speaker 225. The mode M3 is set when the audio change button 261 is pressed once in a state of the mode M2 being set.

Thus, the user can change the audio mode from the audio change button 261 provided to the remote control 251. Therefore the user does not need to perform a complex operation to prevent the voice of the user himself/herself from being heard by the other program sharing user, for example.

FIG. 17 is a block diagram showing an example of functional configuration of the television receiving device 1-1. At least one part of functional parts shown in FIG. 17 is implemented by the execution of a predetermined program by the CPU 232 in FIG. 14.

A display controlling unit 301 controls the panel driving circuit 220 and the like, and thereby controls the display of the display panel 221. For example, the display controlling unit 301 makes a program listing displayed on the basis of EPG data supplied from a reservation managing unit 302, and makes the icon shown in FIG. 7 displayed in a predetermined section of the program listing, which icon indicates that a program is selected as an object for program sharing, on the basis of reservation information managed by the reservation managing unit 302.

In addition, the display controlling unit 301 makes a list of users selectable as other program sharing users displayed on the basis of user information managed by a user information managing unit 306.

When the user sets a reservation for program sharing, the reservation managing unit 302 generates reservation information indicating details of the reservation on the basis of the user information managed by the user information managing unit 306 and program information stored in a program information DB 304. The reservation managing unit 302 stores and manages the generated reservation information in a reservation information DB 303. The reservation information includes the identifying information and the title of a program as an object for program sharing, information on a broadcasting station, and information on the broadcasting start time and the end time of the program as well as information on a user selected as another program sharing user and information on a device used by the user.

The reservation managing unit 302 refers to the reservation information stored in the reservation information DB 303, and when the present time has become a time near the broadcasting start time of the program for which the program sharing reservation is set, the reservation managing unit 302 outputs information indicating that the present time has become the time to start the program sharing to a reproduction controlling unit 305 together with the information on the program as object for the program sharing and the information on the other program sharing user.

In addition, the reservation managing unit 302 stores and manages EPG data obtained via broadcast waves and EPG data obtained via the network 3 in the program information DB 304.

The reservation information DB 303 stores the reservation information generated by the reservation managing unit 302.

The program information DB 304 stores the EPG data obtained via the broadcast waves and the EPG data obtained via the network 3.

The reproduction controlling unit 305 controls various parts of the television receiving device 1-1 to control the reproduction of the object program and communication with the television receiving device used by the other program sharing user.

The user information managing unit 306 generates user information including the names and IP telephone numbers, electronic mail addresses or the like of users registered as other program sharing users. The user information managing unit 306 stores and manages the generated user information in a user information DB 307. The user information managed by the user information managing unit 306 is used to display a list of users which list is used to select another program sharing user, and to generate reservation information, for example.

The user information DB 307 stores the user information generated by the user information managing unit 306.

The functional configuration shown in FIG. 17 is implemented also in the television receiving device 1-2 or 1-3 by the execution of a predetermined program by the CPU 232 of the television receiving device 1-2 or 1-3. The configuration shown in FIG. 17 will be cited as the configuration of the television receiving device 1-2 or 1-3 as appropriate.

The operation of the television receiving device 1 having the configuration as described above will next be described with reference to flowcharts. Suppose also in the following that the user A as user of the television receiving device 1-1 invites the user B as user of the television receiving device 1-2 to program sharing.

A process of the television receiving device 1-1 that sets a reservation for program sharing, that is, the device on the inviting side of the program sharing will first be described with reference to a flowchart of FIG. 18.

This process is started when the program listing button 262 (FIG. 15) provided to the remote control 251 is pressed, for example.

When the program listing button 262 is pressed, the display controlling unit 301 in step S1 controls various parts to display a program listing as shown in FIG. 2 on the display panel 221 on the basis of the EPG data managed by the reservation managing unit 302. When the user A presses the tool button 264 in a state of attention being directed to a predetermined program whose information is displayed in the program listing, the process proceeds to step S2.

In step S2, the display controlling unit 301 displays a menu 21 as shown in FIG. 3 with the section showing the information on the program of interest as a balloon source. When the user A selects program sharing reservation from items shown in the menu 21, the process proceeds to step S3.

In step S3, the display controlling unit 301 displays a list of users as shown in FIG. 4 on the basis of the user information managed by the user information managing unit 306. When the user A selects the user B as another program sharing user from the users displayed in the list, the process proceeds to step S4.

In step S4, the reservation managing unit 302 controls the network I/F 234 to transmit for example the information on the program selected as object for program sharing, information on the user A as user on the inviting side, information on the user B as user on the invited side to the television receiving device 1-2 used by the user B via the server 2 or directly. In response to the transmitted information, the television receiving device 1-2 notifies the user B of an invitation to the program sharing. Information indicating whether the user B has consented to the program sharing in reply to the invitation from the user A is transmitted from the television receiving device 1-2 to the television receiving device 1-1 in predetermined timing.

In step S5, the reservation managing unit 302 determines whether the user B has consented to the program sharing on the basis of the information transmitted from the television receiving device 1-2. When the reservation managing unit 302 determines that the user B has not consented to the program sharing, the process is ended.

When the reservation managing unit 302 determines in step S5 that the user B has consented to the program sharing, on the other hand, the process proceeds to step S6.

In step S6, the reservation managing unit 302 generates reservation information including the information on the program selected as object for the program sharing, the information indicating that the user B is selected as other program sharing user, and the like, and stores the generated reservation information in the reservation information DB 303. The reservation managing unit 302 thereby sets a reservation for the program sharing. Then the process is ended.

A process of the television receiving device 1-2 that sets a reservation for the program sharing, that is, the device on the invited side of the program sharing will next be described with reference to a flowchart of FIG. 19.

This process is started when for example the information on the program selected as object for the program sharing, the information on the user A as user on the inviting side, and the information on the user B as user on the invited side are transmitted from the television receiving device 1-1 (when the process of step S4 in FIG. 18 is performed).

In step S11, the display controlling unit 301 of the television receiving device 1-2 controls various parts to display a message and the like for notifying the user B of the invitation to the program sharing as shown in FIG. 8 on the display panel 221 on the basis of the information transmitted from the television receiving device 1-1. The display controlling unit 301 thereby allows a selection to be made as to whether to consent to the program sharing.

In step S12, the reservation managing unit 302 determines whether consent to the program sharing is given. When the reservation managing unit 302 determines that the user B has not consented to the program sharing, the process is ended.

When the reservation managing unit 302 determines in step S12 that consent to the program sharing is given, on the other hand, the process proceeds to step S13, where the reservation managing unit 302 controls the network I/F 234 to transmit information indicating that the user B has consented to the television receiving device 1-1. Receiving the information indicating that the user B has consented to the program sharing, the television receiving device 1-1 sets a reservation for the program sharing (step S6 in FIG. 18).

In step S14, the reservation managing unit 302 sets a reservation by generating reservation information indicating details of the program sharing to be performed with the user A of the television receiving device 1-1 and storing the reservation information in the reservation information DB 303. Thereafter the process is ended.

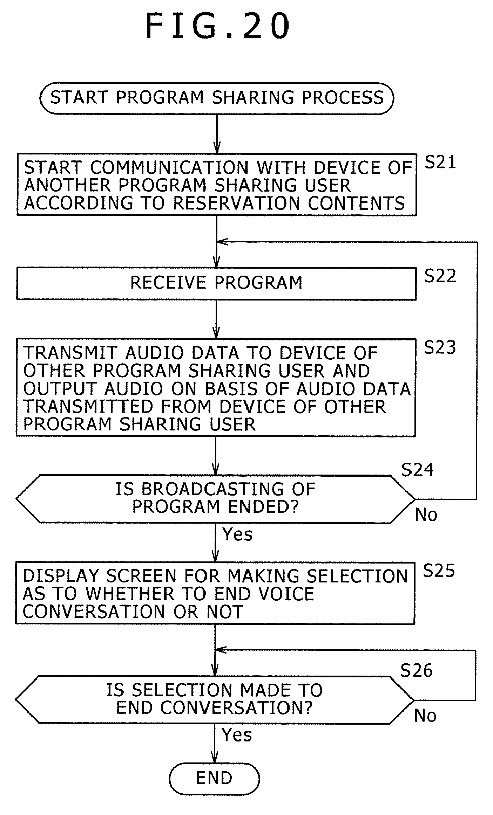

A process of the television receiving device 1-1 performing the program sharing will next be described with reference to a flowchart of FIG. 20.

This process is started when the present time has become a time near the broadcasting start time of the program as object for the program sharing for which program the reservation has been set. As described above, after the reservation for the program sharing is set, the television receiving device 1-1 repeatedly determines whether the present time has become a time near the broadcasting start time of the program as object for the program sharing. When the television receiving device 1-1 determines that the present time has become the time near the broadcasting start time of the program, information indicating that the present time has become the time near the broadcasting start time of the program is output from the reservation managing unit 302 to the reproduction controlling unit 305.

The television receiving device 1-2 used by the user B as the other program sharing user performs the same process in similar timing.

In step S21, the reproduction controlling unit 305 controls congestion and establishes communication between the television receiving device 1-1 and the television receiving device 1-2 as device used by the other program sharing user. Thereby the user A and the user B can have voice conversation based on VoIP. Incidentally, communication between the television receiving device 1-1 and the television receiving device 1-2 may be started when an instruction to start voice conversation is given from the screen as shown in FIG. 12, as described above.

In step S22, the reproduction controlling unit 305 controls the terrestrial tuner 213 or the digital tuner 216 and the like to start receiving the program selected as object for the program sharing and display the video of the program on the display panel 221.

In step S23, the reproduction controlling unit 305 controls the A/D converter circuit 227, the audio codec 228, and the network I/F 234 to transmit the voice data of the user A to the television receiving device 1-2 used by the user B, and makes the audio of the program output from the speaker 225 together with the voice of the user A and the voice of the user B which data is transmitted via the network 3, as appropriate.

Thereby the user A can view the same program as the program being viewed by the user B while having voice conversation with the user B.

In step S24, the reproduction controlling unit 305 determines whether the broadcasting of the program is ended. When the reproduction controlling unit 305 determines that the broadcasting of the program is not ended, the process returns to step S22 to repeat the process from step S22 on down. When the reproduction controlling unit 305 determines in step S24 that the broadcasting of the program is ended, the process proceeds to step S25.

The display controlling unit 301 in step S25 makes the screen as shown in FIG. 13 displayed on the display panel 221 to allow a selection as to whether to disconnect the communication established between the television receiving device 1-1 and the television receiving device 1-2 and end the voice conversation.

In step S26, the reproduction controlling unit 305 determines whether a selection is made to end the conversation, and stands by until the reproduction controlling unit 305 determines that a selection is made to end the conversation. When the reproduction controlling unit 305 determines that a selection is made to end the conversation, the reproduction controlling unit 305 disconnects the communication established between the television receiving device 1-1 and the television receiving device 1-2, and ends the process.

The above process is performed by both the television receiving device 1-1 and the television receiving device 1-2, whereby the program sharing by the user A and the user B is implemented.

While the above description has been made mainly of a case where the shared content is a television broadcast program, the content to be shared may be any content such as a program transmitted via the network 3, radio or music transmitted via broadcast waves or via the network 3, or the like.

In addition, when the content can be reproduced synchronously by the respective devices used by the users sharing the content, the content recorded on recording media such as hard disks included in the devices, optical disks or the like may be the object for the sharing. In this case, the setting of a reservation for the sharing of the content is performed from a list of reproducible contents, for example.

Further, it is assumed in the above description that the television receiving device 1 includes the function of capturing the voice of the user and the function of outputting audio on the basis of data transmitted from the device used by the other program sharing user. However, only these functions may be provided in an external device in a casing separate from that of the television receiving device 1. In this case, program sharing as described above is implemented by connecting the television receiving device 1 and the external device to each other.

FIG. 21 is a block diagram showing an example of configuration of an external device 312 incorporating the function of capturing the voice of the user and the function of outputting audio on the basis of data transmitted from a device used by another program sharing user. FIG. 21 shows a configuration of the external device 312 connected to a television receiving device 311 via a USB cable.

An A/D converter circuit 322 has the same functions as the A/D converter circuit 227 in FIG. 14. The A/D converter circuit 322 receives a signal of voice of the user captured by a microphone 321 provided for voice conversation, and subjects the received audio signal to A/D conversion processing. The A/D converter circuit 322 outputs digital audio data obtained by the A/D conversion processing to an audio encoder 323 and an echo canceling/audio synthesizing circuit 325.

The audio encoder 323 has a part of the functions possessed by the audio codec 228 in FIG. 14. The audio encoder 323 converts the audio data supplied from the A/D converter circuit 322 into data in a predetermined format for transmission via the network 3. The audio encoder 323 outputs the audio data obtained by the format conversion to an audio signal processing circuit 324.

The audio signal processing circuit 324 subjects the audio data supplied from the audio encoder 323 to predetermined processing such as noise removal and the like. The audio signal processing circuit 324 outputs resulting audio data to a USB I/F 328. In addition, the audio signal processing circuit 324 subjects audio data supplied from the USB I/F 328 to predetermined processing such as noise removal and the like. The audio signal processing circuit 324 outputs resulting audio data to the echo canceling/audio synthesizing circuit 325. When program sharing is performed, the voice data of the other program sharing user which data is transmitted via the network 3 is supplied from the USB I/F 328.

When the voice data of the other program sharing user is supplied from the audio signal processing circuit 324 to the echo canceling/audio synthesizing circuit 325, the echo canceling/audio synthesizing circuit 325 synthesizes the voice of the user of the own device which voice is supplied from the A/D converter circuit 322 and the voice of the other program sharing user with each other according to the audio mode described with reference to FIG. 16. The echo canceling/audio synthesizing circuit 325 outputs audio data obtained by the synthesis to an audio amplifying circuit 326. Incidentally, as shown in FIG. 21, when the external device 312 is provided with the function of capturing the voice of the user and the function of outputting the voice of the other program sharing user, the audio of the program is output from a speaker of the television receiving device 311, for example.

The audio amplifying circuit 326 subjects the audio data supplied from the echo canceling/audio synthesizing circuit 325 to D/A conversion processing and amplification processing, thereby adjusts the audio data to a predetermined sound volume, and then outputs the audio from a speaker 327.

The USB I/F 328 outputs the audio data supplied from the audio signal processing circuit 324 to the television receiving device 311 via a USB terminal 329. The audio data output to the television receiving device 311 is transmitted from a network I/F provided in the television receiving device 311 to the television receiving device used by the other program sharing user via the network 3.

In addition, the USB I/F 328 receives the audio data of the other program sharing user which data is received by the television receiving device 311 and transmitted to the USB I/F 328 via the USB cable, and then outputs the audio data to the audio signal processing circuit 324.

Thus, it is possible to allow the user to perform program sharing as described above also by providing a configuration for implementing the function of capturing the voice of the user and the function of outputting audio on the basis of data transmitted from the device used by the other program sharing user in an external device in a casing separate from that of the television receiving device. For example, even in a case where the television receiving device owned by the user is not provided with a microphone or the like, the user can perform program sharing by combining the television receiving device owned by the user with the external device 312 when the television receiving device owned by the user is provided with a USB terminal or the like.

While the above description has been made assuming that the users performing program sharing can obtain a program provided by a same path (network), there is for example a case where the device used by one user can receive both broadcast programs of digital broadcasting and analog broadcasting, whereas the device used by the other user does not support digital broadcasting and is thus able to receive only programs of analog broadcasting. In this case, because digital broadcasting and analog broadcasting broadcast programs of same contents in the present situation (because so-called simultaneous broadcasting is performed), a same program can be viewed on both the devices though provided by different networks. However, even if the same program can be viewed on both the devices, there may be a difference in output timing between the different networks. This may reduce the appeal of program sharing.

For example, when a certain scene of the same program is provided by digital broadcasting and analog broadcasting, the scene broadcast by the latter analog broadcasting is displayed a few seconds earlier. Therefore the user viewing the program provided by the analog broadcasting reacts to the scene in timing earlier than the user viewing the program provided by the digital broadcasting. Thus the appeal of program sharing is reduced.

Accordingly, in order to prevent this, the television receiving device may make a network adjustment when a reservation for program sharing is set. For example, in a case where the device used by one user supports digital broadcasting and analog broadcasting, whereas the device used by the other user supports only analog broadcasting, even when the user of the device supporting digital broadcasting and analog broadcasting offers an invitation to program sharing with a program of digital broadcasting as an object, a network adjustment is performed so that the program of analog broadcasting is received by both the television receiving devices.

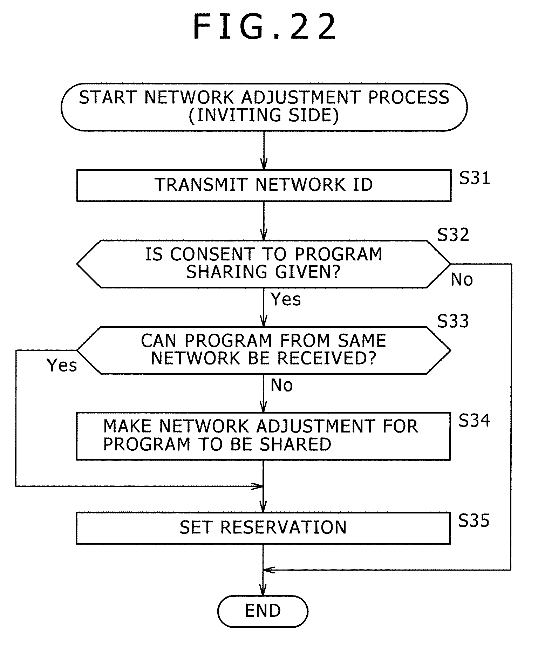

A network adjustment process performed by the television receiving device 1-1 used by the user A as user on the inviting side of program sharing will be described below with reference to a flowchart of FIG. 22.

This process is started after the performance of the process of step S4 in which the information on the program as object for the program sharing and the like are transmitted to the television receiving device 1-2 used by the user B, among the processes of FIG. 18, for example.

In step S31, the reservation managing unit 302 of the television receiving device 1-1 transmits the ID of a network providing the program selected as object for the program sharing to the television receiving device 1-2 used by the user B. In this example, an ID is set to each of terrestrial digital broadcasting, BS digital broadcasting, CS digital broadcasting, and analog broadcasting.

In step S32, the reservation managing unit 302 determines whether the user B has consented to the program sharing on the basis of information transmitted from the television receiving device 1-2. When the reservation managing unit 302 determines that the user B has not consented to the program sharing, the process is ended.

When the reservation managing unit 302 determines that the user B has consented to the program sharing, on the other hand, the process proceeds to step S33, where the reservation managing unit 302 determines whether the television receiving device 1-2 used by the user B can receive programs of the same network as the network providing the program selected as object for the program sharing on the basis of the ID. In this step, when the user A selects a program provided by a digital broadcasting as the program as object for the program sharing, for example, the reservation managing unit 302 determines whether the television receiving device 1-2 can receive the same program provided by the digital broadcasting. Together with the information indicating that the user B has consented to the program sharing, the television receiving device 1-2 transmits the IDs of networks useable by the television receiving device 1-2.

When the reservation managing unit 302 determines in step S33 that the television receiving device 1-2 used by the user B cannot receive programs of the same network as the network providing the program selected as object for the program sharing by the user A, the process proceeds to step S34, where a network adjustment is made.

For example, in a case where the television receiving device 1-1 supports digital broadcasting and analog broadcasting, whereas the television receiving device 1-2 supports only analog broadcasting, even when the user A offers an invitation to the program sharing with the program of digital broadcasting as an object, a network adjustment is performed so that a program as an object when the program sharing is actually performed is the program of analog broadcasting.

When the network adjustment is completed, or when the reservation managing unit 302 determines in step S33 that the television receiving device 1-2 used by the user B can receive programs of the same network as the network providing the program selected as object for the program sharing by the user A, the reservation managing unit 302 in step S35 sets a reservation for the program sharing by storing reservation information in the reservation information DB 303.

When the network adjustment is made as described above, the reservation information includes information indicating that the program sharing is to be performed with the program provided by analog broadcasting as object. When the broadcasting start time of the program selected as object for the program sharing has approached, the reception of the program of analog broadcasting is started according to the information.

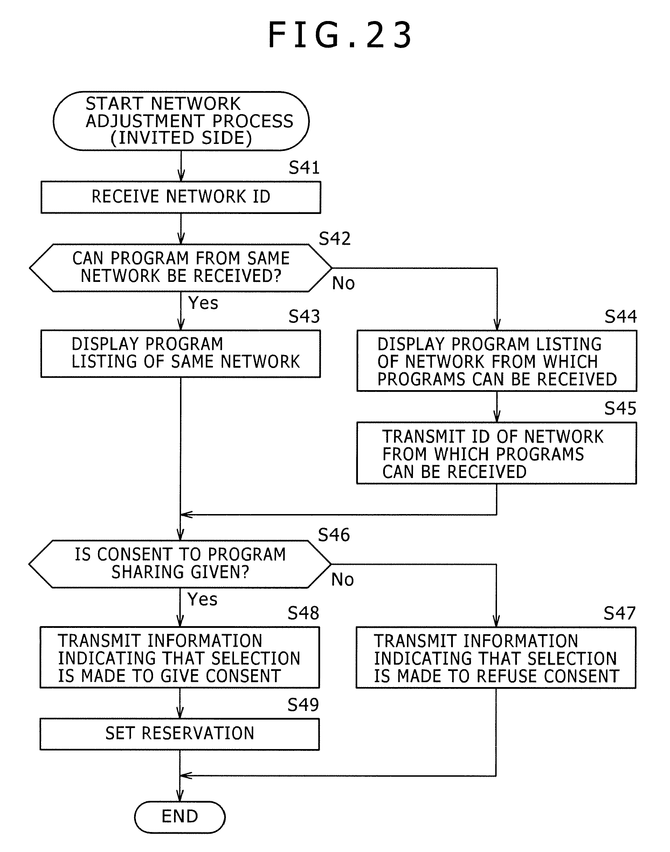

A network adjustment process performed by the television receiving device 1-2 used by the user B as user on the invited side of the program sharing will next be described with reference to a flowchart of FIG. 23.

After the process of FIG. 22 is started by the television receiving device 1-1 and the ID of the network is transmitted from the television receiving device 1-1 (after the process of step S31 in FIG. 22 is performed), the reservation managing unit 302 of the television receiving device 1-2 receives the transmitted ID in step S41.

In step S42, the reservation managing unit 302 determines whether the television receiving device 1-2 itself can receive programs of the same network as the network providing the program selected by the user A on the basis of the ID.

When the reservation managing unit 302 determines in step S42 that the television receiving device 1-2 itself can receive programs of the same network as the network providing the program selected by the user A, the process proceeds to step S43.

In step S43, the display controlling unit 301 makes a program listing of the same network as the network providing the program selected by the user A displayed on the display panel 221 to allow the user B to check information on the program selected as object for the program sharing.

On the other hand, when the reservation managing unit 302 determines in step S42 that the television receiving device 1-2 itself cannot receive programs of the same network as the network providing the program selected by the user A, the process proceeds to step S44, where a program listing of a network that can be received by the television receiving device 1-2 itself is made to be displayed by the display controlling unit 301.

In a case where a certain program is provided by each of digital broadcasting and analog broadcasting, even when the television receiving device 1-2 itself cannot receive the program provided by digital broadcasting, the television receiving device 1-2 can display a program listing of analog broadcasting which listing includes information on the same program. Thereby the user B can check the information on the program selected as object for the program sharing by the user A though the network is different.

The reservation managing unit 302 in step S45 transmits the ID of the network that can be received by the television receiving device 1-2 itself to the television receiving device 1-1. After the process of step S43 or S45 is performed, the process proceeds to step S46.

In step S46, the reservation managing unit 302 determines whether the user B has consented to the program sharing. When the reservation managing unit 302 determines that the user B has not consented to the program sharing, the process proceeds to step S47, where the reservation managing unit 302 transmits information indicating that the user B has not consented to the program sharing to the television receiving device 1-1. Then the process is ended.

On the other hand, when the reservation managing unit 302 determines in step S46 that the user B has consented to the program sharing, the process proceeds to step S48, where the reservation managing unit 302 controls the network I/F 234 to transmit information indicating that the user B has consented to the program sharing to the television receiving device 1-1.

In step S49, the reservation managing unit 302 sets a reservation by generating reservation information indicating details of the program sharing to be performed with the user A of the television receiving device 1-1 and storing the reservation information in the reservation information DB 303. Thereafter the process is ended.

When the broadcasting start time of the program as object for the program sharing has approached, the television receiving device 1-2 starts receiving the program of analog broadcasting according to the reservation information.

Such a process can prevent the appeal of program sharing from being reduced by different networks.

The series of processes described above can be carried out not only by hardware but also by software. When the series of processes is to be carried out by software, a program constituting the software is installed from a program recording medium onto a computer incorporated in special hardware, or for example a general-purpose personal computer that can perform various functions by installing various programs thereon.

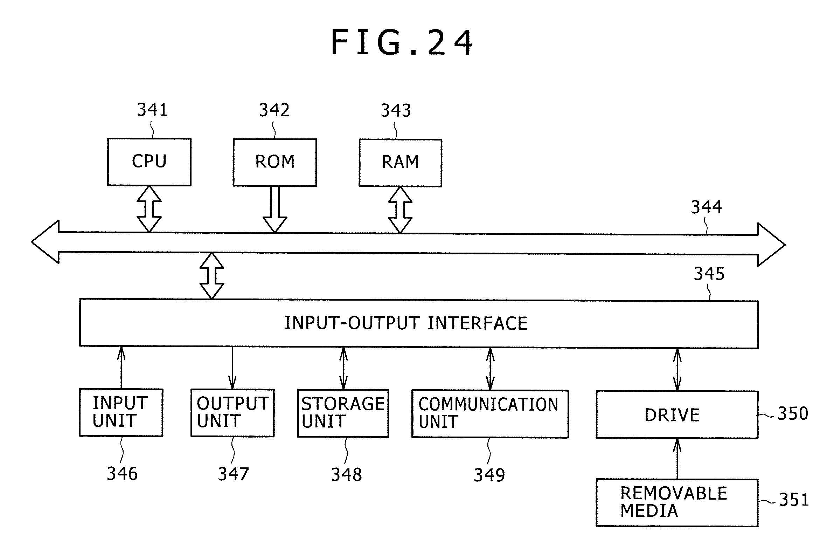

FIG. 24 is a block diagram showing an example of configuration of a personal computer performing the above-described series of processes by a program.

A CPU 341 performs various processes according to a program stored in a ROM 342 or a storage unit 348. A RAM 343 stores the program executed by the CPU 341, data and the like as required. The CPU 341, the ROM 342, and the RAM 343 are interconnected via a bus 344.

The CPU 341 is also connected with an input-output interface 345 via the bus 344. The input-output interface 345 is connected with an input unit 346 formed by a keyboard, a mouse, a microphone and the like, and an output unit 347 formed by a display, a speaker and the like. The CPU 341 performs various processes in response to commands input from the input unit 346. The CPU 341 then outputs a result of a process to the output unit 347.

The storage unit 348 connected to the input-output interface 345 is formed by a hard disk, for example. The storage unit 348 stores the program executed by the CPU 341 and various data. A communication unit 349 communicates with external devices via networks such as the Internet, a local area network and the like.

When removable media 351 such as a magnetic disk, an optical disk, a magneto-optical disk, a semiconductor memory and the like are loaded into a drive 350 connected to the input-output interface 345, the drive 350 drives these removable media 351 to obtain programs, data, and the like recorded on the removable media 351. The obtained programs and data are transferred to the storage unit 348 to be stored therein as required.

As shown in FIG. 24, the program recording medium storing the program to be installed onto the computer and thereby set to a state of being executable by the computer is formed by the removable media 351 as packaged media including a magnetic disk (including flexible disks), an optical disk (including CD-ROM (Compact Disk-Read Only Memory) and DVD (Digital Versatile Disk)), a magneto-optical disk, a semiconductor memory and the like, or formed by the ROM 342, the hard disk forming the storage unit 348, and the like that store the program temporarily or permanently. As required, the storing of the program on the program recording medium is performed via the communication unit 349 as an interface such as a router, a modem or the like using a wire or wireless communication medium such as a local area network, the Internet, digital satellite broadcasting or the like.

It is to be noted that in the present specification, the steps describing the program stored on the program storage medium include not only processes carried out in time series in the described order but also processes carried out in parallel or individually and not necessarily in time series.

In addition, in the present specification, a system refers to an apparatus as a whole formed by a plurality of devices.

It should be understood by those skilled in the art that various modifications, combinations, subcombinations and alterations may occur depending on design requirements and other factors insofar as they are within the scope of the appended claims or the equivalents thereof.

## Claims

1. A communication system comprising:
a first information processing device (1-1); and
a second information processing device (1-2; 1-3) connected to each other via a network;
wherein said first information processing device includes
a display controlling unit (301) performing control to display a list of devices selectable as other devices with which to perform communication while viewing a predetermined content when said predetermined content is selected from a list of contents, and
a setting unit (302), when said second information processing device is selected from the list of the devices, the list being displayed by said display controlling unit (301), transmitting information on said predetermined content to said second information processing device, and when information indicating that a user of said second information processing device has consented to view said predetermined content while performing communication is transmitted from said second information processing device, setting a reservation to view said predetermined content while performing communication with said second information processing device, and
said second information processing device (1-2) includes
a display controlling unit performing control to display a selection screen used to make a selection as to whether to consent to view said predetermined content while performing communication with said first information processing device when information on said predetermined content selected by a user of said first information processing device is transmitted from said first information processing device, and
a communicating unit transmitting, to said first information processing device, information indicating that the user of said second information processing device has made a selection to consent to view said predetermined content while performing communication with said first information processing device when the user of said second information processing device has made the selection from said selection screen to consent to view said predetermined content while performing communication with said first information processing device.

2. An information processing device comprising:
a display controlling unit (301) performing control to display a list of devices selectable as other devices with which to perform communication while viewing a predetermined content when said predetermined content is selected from a list of contents; and
a setting unit (302), when a predetermined device is selected from the list of the devices, the list being displayed by said display controlling unit (301), transmitting information on said predetermined content to said predetermined device, and when information indicating that a user of said predetermined device has consented to view said predetermined content while performing communication is transmitted from said predetermined device, setting a reservation to view said predetermined content while performing communication with said predetermined device.

3. The information processing device as claimed in claim 2, further comprising
a communicating unit starting communication with said predetermined device according to the reservation set by said setting unit.

4. The information processing device as claimed in claim 2 or 3, further comprising:
an obtaining unit obtaining audio data; and
an outputting unit outputting audio on a basis of the audio data;
wherein said communicating unit transmits the audio data obtained by said obtaining unit to said predetermined device, and receives audio data transmitted from said predetermined device and outputs audio from said outputting unit on a basis of the received audio data.

5. The information processing method comprising the steps of:
displaying a list of devices selectable as other devices with which to perform communication while viewing a predetermined content when said predetermined content is selected from a list of contents; and
when a predetermined device is selected from the list of the devices, transmitting information on said predetermined content to said predetermined device, and when information indicating that a user of said predetermined device has consented to view said predetermined content while performing communication is transmitted from said predetermined device, setting a reservation to view said predetermined content while performing communication with said predetermined device.

6. A program for making a computer perform a process comprising the steps of:
displaying a list of devices selectable as other devices with which to perform communication while viewing a predetermined content when said predetermined content is selected from a list of contents; and
when a predetermined device is selected from the list of the devices, transmitting information on said predetermined content to said predetermined device, and when information indicating that a user of said predetermined device has consented to view said predetermined content while performing communication is transmitted from said predetermined device, setting a reservation to view said predetermined content while performing communication with said predetermined device.

7. An information processing device comprising:
a display controlling unit performing control to display a selection screen used to make a selection as to whether to consent to view a predetermined content selected by a user of a predetermined device connected to the information processing device via a network while performing communication with the predetermined device when information on the predetermined content is transmitted from said predetermined device; and
a communicating unit transmitting, to said predetermined device, information indicating that a user has made a selection to consent to view said predetermined content while performing communication with said predetermined device when the user has made the selection from said selection screen to consent to view said predetermined content while performing communication with said predetermined device.

8. The information processing device as claimed in claim 7, further comprising
a setting unit setting a reservation to view said predetermined content while performing communication with said predetermined device.

9. The information processing device as claimed in claim 8,
wherein said communicating unit starts communication with said predetermined device according to the reservation set by said setting unit.

10. The information processing device as claimed in claim 7, 8 or 9, further comprising:
an obtaining unit obtaining audio data; and
an outputting unit outputting audio on a basis of the audio data;
wherein said communicating unit transmits the audio data obtained by said obtaining unit to said predetermined device, and receives audio data transmitted from said predetermined device and outputs audio from said outputting unit on a basis of the received audio data.

11. An information processing method comprising the steps of:
performing control to display a selection screen used to make a selection as to whether to consent to view a predetermined content selected by a user of a predetermined device connected to the information processing device via a network while performing communication with said predetermined device when information on said predetermined content is transmitted from said predetermined device; and
transmitting, to said predetermined device, information indicating that a user has made a selection to consent to view said predetermined content while performing communication with said predetermined device when the user has made the selection from said selection screen to consent to view said predetermined content while performing communication with said predetermined device.

12. A program for making a computer performing a process comprising the steps of:
performing control to display a selection screen used to make a selection as to whether to consent to view a predetermined content selected by a user of a predetermined device connected to the information processing device via a network while performing communication with said predetermined device when information on said predetermined content is transmitted from said predetermined device; and
transmitting, to said predetermined device, information indicating that a user has made a selection to consent to view said predetermined content while performing communication with said predetermined device when the user has made the selection from said selection screen to consent to view said predetermined content while performing communication with said predetermined device.
